# EUROPEAN PATENT SPECIFICATION

(11) **EP 3 754 909 B1**
(45) Date of publication and mention of the grant of the patent: **15.05.2024**
(21) Application number: 19772188.9
(22) Date of filing: 20.02.2019
(51) Int. Cl.: H04L 41/142, H04L 43/106, H04L 43/026, H04L 41/5067, H04L 43/062, H04L 43/0829, H04L 43/0852

(54) **DATA PROCESSING METHOD AND CLIENT**
DATENVERARBEITUNGSVERFAHREN UND CLIENT
PROCÉDÉ DE TRAITEMENT DE DONNÉES ET CLIENT

(30) Priority: 21.03.2018 CN 201810234918
(43) Date of publication of application: 23.12.2020
(73) Proprietor: HUAWEI TECHNOLOGIES CO., LTD., Shenzhen, Guangdong 518129 (CN)
(72) Inventor: TAN, Hao, Shenzhen, Guangdong 518129 (CN); WANG, Xingchun, Shenzhen, Guangdong 518129 (CN); LI, Jianping, Shenzhen, Guangdong 518129 (CN)
(74) Representative: MERH-IP Matias Erny Reichl Hoffmann Patentanwälte PartG mbB
(86) International application number: PCT/CN2019/075556
(87) International publication number: WO 2019/179275

(56) References cited:
- EP-A1- 2 439 953
- EP-A1- 2 884 493
- WO-A1-2014/029291
- WO-A1-2014/067540
- CN-A- 103 581 956
- CN-A- 106 791 805
- CN-A- 107 592 646
- CN-A- 108 199 916
- US-A1- 2010 135 171

## Description

This application claims priority to Chinese Patent Application No. 201810234918.0, filed with the China National Intellectual Property Administration on March 21, 2018 and entitled "DATA PROCESSING METHOD AND CLIENT"

### TECHNICAL FIELD

This application relates to the communications field, and in particular, to a data processing method and a client.

### BACKGROUND

VoLTE (voice over LTE) is a voice service based on an IP multimedia subsystem (IP multimedia system, IMS), is an end-to-end voice solution provided in an LTE network under an all-IP condition, and can implement integration of data and voice services in a same network. Introduction of high-definition voice and video coding/decoding improves call quality, shortens a connection waiting time for a user, and brings in a higher-quality and more-natural audio and/or video call effect for the user.

In key performance indicators for measuring user experience of a VoLTE service, voice and video quality is crucial. Evaluation methods of voice and video quality include two types: subjective evaluation and objective evaluation. Subjective evaluation is people-oriented voice quality evaluation in which an evaluation listener participating in evaluation listening scores for voice and video quality according to an evaluation criterion agreed on in advance. This evaluation method reflects a subjective opinion of the evaluation listener on voice and video quality, and reflects real voice and video quality. Currently, common subjective evaluation methods include a mean opinion score (mean opinion Score, MOS) method, diagnostic rhyme tests (diagnostic rhyme tests, DRT), and the like. Objective evaluation is automatic determining of voice and video quality with a machine, and may be divided into active evaluation based on input and output manners and passive evaluation based on an output manner in principles. Active evaluation is based on an error comparison between original voice, video signals and distorted voice, video signals. Currently, common active evaluation methods include perceptual evaluation of speech quality (perceptual evaluation of speech quality, PESQ), perceptual objective listening quality assessment (perceptual objective listening quality assessment, POLQA), and the like. Passive evaluation is to establish a relationship between perceived voice and video quality and parameters related to a network and audio and video streams and the like, to capture a network parameter or a voice and video stream parameter and perceive voice and video quality by using a mathematical model. Currently, a common passive evaluation method includes R-factor. According to the MOS evaluation method, an original subjective evaluation manner is discarded, and a corresponding level and a voice and video quality degree are calculated by using a quantitative algorithm of the objective evaluation method.

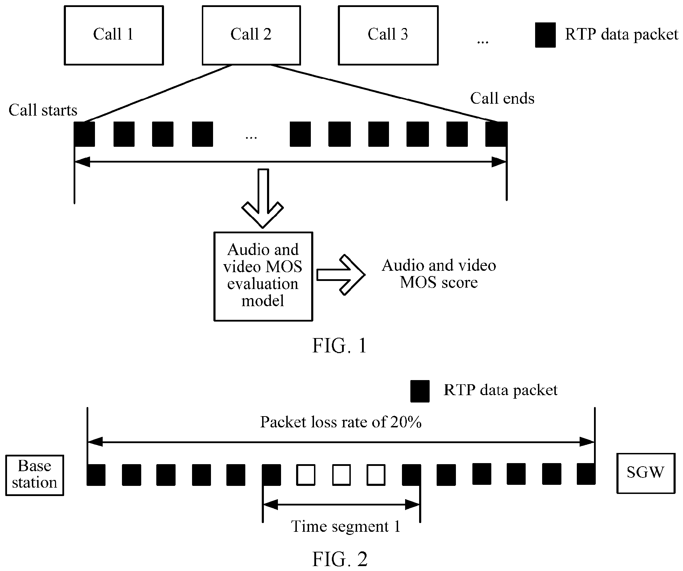

In an existing voice and video quality evaluation method, voice and video feature parameters in a call process are mainly extracted, and a MOS score that fits subjective user perception is obtained through a series of calculation. The feature parameters include transmission indicators such as a delay, a jitter, and a packet loss and call features such as coding/decoding type, an audio code rate, and a video resolution. Voice data and video data of VoLTE are usually transmitted by using a real-time transport protocol (real-time transport protocol, RTP) data packet. Real-time control protocol (real-time control protocol, RTCP) and RTP work together. An RTCP data packet is encapsulated with a statistics report of a transmit end or a receive end, where the statistics report includes statistical information about a quantity of sent RTP data packets, a quantity of lost RTP data packets, RTP data packet jitter, and the like. A minimum measurement unit of MOS evaluation is a complete call service including a complete voice call or a complete video call. A complete call service is distinguished by using a source IP address, a source port number, a destination IP address, and a destination port number used in a call. A complete call service includes sending, by the transmit end, audio data and/or video data to the receive end, which may be referred to as an uplink-direction service, and further includes receiving, by the transmit end, audio data and/or video data from the receive end, which may be referred to as a downlink-direction service. A MOS score of the uplink-direction service may be calculated based on feature parameters including a transmission indicator and a call feature in an uplink-direction service process by using a MOS evaluation algorithm. Similarly, a MOS score of the downlink-direction service can also be obtained. For example, feature parameters of an uplink/downlink direction are separately inputted to an audio and video MOS evaluation model E-Model by using the R-factor method, to calculate R, and a MOS score of the uplink/downlink-direction service is obtained by using a conversion formula. Refer to FIG. 1.

A MOS score depends on a feature parameter of a complete call service. A packet loss parameter of a complete call service is used as an example. A packet loss rate is negatively correlated to a MOS score. A higher packet loss rate indicates a lower MOS score, and otherwise, a MOS score is higher. For example, an uplink-direction service process of a complete call service has a total of 15 RTP data packets. An RTP data packet of an uplink-direction service that is transmitted on a network is obtained through mirroring on an interface (for example, an S1-U interface) that the RTP data packet of the complete call service passes through. Referring to FIG. 2, it is determined that three RTP data packets are lost on the S1-U interface. Therefore, a packet loss rate of passing through the S1-U interface by the uplink-direction service is 20%. A MOS score of passing through the S1-U interface by the uplink-direction service is not obviously low, and it is considered that user perception is desirable when the uplink-direction service passes through the S1-U interface. However, as can be seen from FIG. 2, in a period formed by moments of receiving RTP data packets, for example, a period 1 shown in FIG. 2, three consecutive RTP data packets are lost when the uplink-direction service passes through the S1-U interface, a packet loss rate is as high as 60% in the period 1, and user perception is actually relatively poor in the period when the uplink-direction service passes through the S1-U interface. Because MOS evaluation focuses on a feature parameter of a complete call service, relatively poor user perception in a period is weakened. As a result, an evaluation result of voice and video quality is inaccurate.

WO 2014/067540 A1 discloses methods and systems for detecting periodic impairments of media streams of real-time communication sessions within a packet-switched network. The methods are performed in a passive monitoring system monitoring a plurality of media streams providing quality data records for each monitored media stream and for predefined time intervals. For each media stream a frequency distribution is generated, which is indicative of the number of good quality data records between two quality data records indicative of impairment. If a maximum exists in the media stream's frequency distribution for a given number of consecutive good quality data records, the stream is determined to be periodically impaired and said given number of consecutive good quality data records for which the maximum exists indicates the periodicity in the impairment of the media stream.

### SUMMARY

Embodiments of this application provide a data processing method and a client, to classify data packets of a target call service whose obtaining moments are in different time segments into different data packet sets, determine a feature parameter corresponding to each of the different data packet sets, and evaluate audio and/or video quality corresponding to each feature parameter. To be specific, time segments are classified for the target call service, and MOS evaluation may be performed based on the feature parameter of each of the classified different time segments, so that accuracy of an evaluation result of voice and video quality can be improved. The technical improvement is achieved by the solution provided in accordance with the claims.

### BRIEF DESCRIPTION OF DRAWINGS

FIG. 1 is a schematic diagram of a MOS evaluation method of voice and video quality in the prior art;
FIG. 2 is a schematic diagram of calculating a packet loss rate of a voice or video data packet in the prior art;
FIG. 3 is a schematic architectural diagram of a data processing system according to an embodiment of this application;
FIG. 4 is a schematic diagram of an embodiment of a data processing method according to an embodiment of this application;
FIG. 5 is a schematic diagram of another embodiment of a data processing method according to an embodiment of this application;
FIG. 6 is a schematic diagram of classifying data packets based on location information according to an embodiment of this application;
FIG. 7 is a schematic diagram of another embodiment of a data processing method according to an embodiment of this application;
FIG. 8 is a schematic diagram of classifying data packets based on a call feature according to an embodiment of this application;
FIG. 9A and FIG. 9B are a schematic diagram of another embodiment of a data processing method according to an embodiment of this application;
FIG. 10 is a schematic diagram of classifying data packets based on a time according to an embodiment of this application;
FIG. 11A and FIG. 11B are a schematic diagram of another embodiment of a data processing method according to an embodiment of this application;
FIG. 12 is a schematic diagram of classifying data packets based on a plurality of dimensions according to an embodiment of this application;
FIG. 13 is a schematic diagram of an embodiment of a client according to an embodiment of this application; and
FIG. 14 is a schematic diagram of another embodiment of a client according to an embodiment of this application.

### DESCRIPTION OF EMBODIMENTS

Embodiments of this application provide a data processing method and a client, to classify data packets of a target call service whose obtaining moments are in different time segments into different data packet sets, determine a feature parameter corresponding to each of the different data packet sets, and evaluate audio and/or video quality corresponding to each feature parameter. To be specific, time segments are classified for the target call service, and MOS evaluation may be performed based on the feature parameter of each of the classified different time segments, so that accuracy of an evaluation result of voice and video quality can be improved.

To make a person skilled in the art understand the method in the present invention better, the following clearly and completely describes the technical solutions in the embodiments of the present invention with reference to the accompanying drawings in the embodiments of the present invention. Apparently, the described embodiments are merely some rather than all of the embodiments of the present invention. Embodiments based on the present invention should all belong to the protection scope of the present invention.

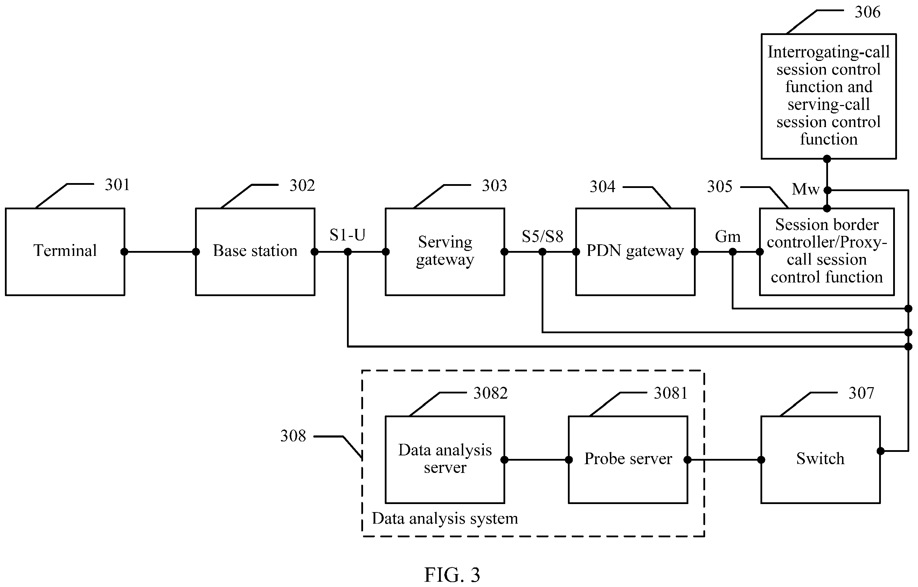

Referring to FIG. 3, an architecture of a data processing system may include a terminal 301, a base station (for example, eNodeB) 302, a serving gateway (serving gateway, SGW) 303, a PDN gateway (PDN gateway, PGW) 304, a session border controller (session border controller, SBC)/proxy-call session control function (proxy-call session control function, P-CSCF) 305, an interrogating-call session control function (interrogating-call session control function, I-CSCF) and a serving-call session control function (serving-call session control function, S-CSCF) 306, a switch 307, and a data analysis system 308.

The terminal 301 may first establish a connection to the eNodeB 302 and then initiate a call service that may be a VoLTE call service or may be a common voice call service or video call service. Specifics are not limited herein. The eNodeB 302 is responsible for providing access to a core network for the terminal, performing scheduling and transmission of paging information, performing scheduling and transmission of broadcast information, and the like.

IP packets of all terminals 301 are sent by the SGW 303, the SGW 303 is connected to the PGW 304, and the PGW 304 provides IP address assignment and another function for the terminal 301. An S1 interface is a communication interface between the eNodeB 302 and a core network, divides an LTE system into a radio access network and a core network, and may be classified into an S1-MME interface used for a control plane and an S1-U interface used for a user plane. The S1 -MME interface is connected to the eNodeB 302 and a mobility management entity (mobility management entity, MME), and is configured to transfer session management and mobility management information. The S1-U interface is connected to the eNodeB 302 and the SGW 303, and is configured to: establish a tunnel between an SGW and a PGW (collectively referred to as a GW) and an eNodeB device and transfer a user data service. An interface between the SGW 303 and the PGW 304 is an S5/S8 interface. The S5 interface is an interface used when a local SGW is connected to a local PGW, and the S8 is an interface used when a local SGW is connected to a foreign PGW.

A call session control function (call session control function, CSCF) is a functional entity in an IP multimedia subsystem (IP Multimedia subsystem, IMS), is a core of an entire IMS network, and is mainly responsible for processing signaling control in a multimedia call session process, managing user authentication of an IMS network and bearer plane QoS of an IMS, and cooperating with another network entity to control a session initiation protocol (session initiation protocol, SIP) session and perform service consultation and resource allocation, and the like. The CSCF may be classified into a P-CSCF, an I-CSCF, an S-CSCF, an E-CSCF, and the like based on functions. The P-CSCF is a uniform entry point of a visited IMS network, and session messages initiated by an IMS terminal and terminated at an IMS terminal all need to pass through the P-CSCF. The P-CSCF forwards, to the I-CSCF, an SIP registration request sent by the terminal 301 and forwards, to the S-CSCF, a SIP message sent by the terminal 301. The S-CSCF is configured to: receive a registration request forwarded by the P-CSCF from a visited network, cooperate with a home subscriber server (home subscriber server, HSS) to perform user authentication, and perform routing management on user calling and called sides. The I-CSCF is an entry point of an IMS home network, and is configured to query an HSS to select an S-CSCF for a user in a registration process. In a call process, a call to an IMS network is first routed to the I-CSCF, and the I-CSCF obtains, from an HSS, an S-CSCF address with which a user is registered and routes a message to the S-CSCF.

An SBC is a call control product of voice over Internet Protocol (voice over internet protocol, VoIP), is usually located between a softswitch controlling a VoIP service and public Internet, and has functions of network address translation and traversal, network security control, and quality of service (quality of service, QoS). A Gm interface is an interface between an IMS terminal and a P-CSCF, and is configured to access the terminal 301 to an IMS and transmit all SIP signaling messages between the terminal 301 and an IMS. An Mw is a SIP-based interface between CSCFs, and is configured to perform registration, session control, and a transaction procedure. In the architecture of the data processing system in FIG. 3, the SBC is optional, and there may be an SBC or may not be an SBC. Specifics are not limited herein.

The switch 307 has a plurality of ports. Each port has a bridge function, and may be connected to a local area network, or a high-performance server, or a working station. Data may be transmitted between a plurality of port pairs at a same moment, and data can be received while data is sent, and receiving and sending are simultaneously performed.

The data analysis system 308 may include a probe server 3081 and a data analysis server 3082. The probe server 3081 includes a data obtaining module and a data analysis module, and may obtain data of a network through mirroring and analyze the obtained data. The data analysis server 3082 may perform further processing analysis, for example, aggregation, association, and classification, on the data obtained by the probe server 3081, and may present a result obtained after analysis to a user having a requirement.

In the architecture of the data processing system in FIG. 3, the switch 307 and the data analysis system 308 are optional, and there may be the switch 307 and the data analysis system 308, or there may not be the switch 307 and the data analysis system 308. Specifics are not limited herein.

It may be understood that FIG. 3 shows only an example of an architecture of a data processing system. In an actual application, the architecture of the data processing system may further include another network element, such as a media gateway (media gateway, MGW). Specifics are not limited herein.

The client in the embodiments of this application may be the terminal 301, or may be a network element such as the eNodeB 302, the SGW 303, the PGW 304, the SBC/P-CSCF 305, the I-CSCF, and the S-CSCF 306, or may be the probe server 3081. Specifics are not limited herein.

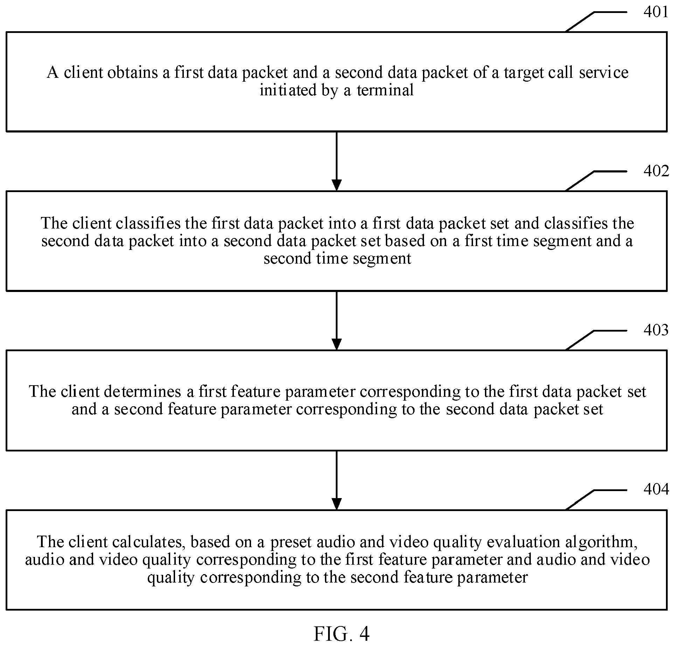

Referring to FIG. 4, an embodiment of a data processing method according to an embodiment of this application includes:
401: A client obtains a first data packet and a second data packet of a target call service initiated by a terminal.

When the terminal is registered with a network and initiates the target call service, the network allocates a corresponding bearer or packet data protocol (packet data protocol, PDP) context to a user. The terminal may transmit, in the network through the bearer or the PDP context, data packets carrying voice data and video data. The data packets may be transferred to a called terminal through transparent transmission of an access network element and a core network element. In a process of transferring the data packet of the target call service, the client may obtain the data packet of the target call service. For example, when the client is a terminal, a data obtaining module of the terminal may obtain a data packet sent by the terminal. Alternatively, when the client is a network element, for example, an MGW, the MGW may obtain a data packet through mirroring when receiving a data packet sent by the terminal. Alternatively, when the client is a probe server, the probe server may capture a data packet by using a network probe. Specifics are not limited herein.

In this embodiment, the client may sequentially obtain the first data packet of the target call service and the second data packet of the target call service. A first obtaining moment of the first data packet belongs to a first time segment, a second obtaining moment of the second data packet belongs to a second time segment, the first time segment and the second time segment are different time segments in which the client obtains the data packets of the target call service, and an intersection set of the first time segment and the second time segment is empty.

402: The client classifies the first data packet into a first data packet set and classifies the second data packet into a second data packet set based on a first time segment and a second time segment.

After obtaining the first data packet and the second data packet of the target call service described in step 401, the client may classify the first data packet into the first data packet set and classify the second data packet into the second data packet set based on the first time segment and the second time segment, to classify time segments of the target call service.

403: The client determines a first feature parameter corresponding to the first data packet set and a second feature parameter corresponding to the second data packet set.

In this embodiment, the client may determine the first feature parameter of the data packet in the first data packet set and the second feature parameter of the data packet in the second data packet set. The first feature parameter may include transmission indicators such as a delay, a jitter, and a packet loss of the data packet in the first data packet set and call features such as a coding/decoding type, an audio code rate, and a video resolution. The second feature parameter may include transmission indicators such as a delay, a jitter, and a packet loss of the data packet in the second data packet set and call features such as a coding/decoding type, an audio code rate, and a video resolution.

404: The client calculates, based on a preset audio and/or video quality evaluation algorithm, audio and/or video quality corresponding to the first feature parameter, and audio and/or video quality corresponding to the second feature parameter.

In this embodiment, the client may calculate, based on the preset audio and/or video quality evaluation algorithm, the audio and/or video quality corresponding to the first feature parameter, and the audio and/or video quality corresponding to the second feature parameter. The audio and/or video quality evaluation algorithm may include a MOS evaluation method, such as a PESQ algorithm and an R-factor algorithm. The audio and/or video quality evaluation algorithm may further include a corresponding algorithm for evaluating one-way audio, word swallowing, intermittence, and the like. Specifics are not limited herein. In a subsequent embodiment, only the MOS evaluation method is used as the preset audio and/or video quality evaluation algorithm as an example for description.

In this embodiment, if obtaining the first data packet and the second data packet of the target call service initiated by the terminal, the client may classify the first data packet into the first data packet set and classify the second data packet into the second data packet set based on the first time segment and the second time segment. The first obtaining moment of the first data packet belongs to the first time segment, and the second obtaining moment of the second data packet belongs to the second time segment. The first time segment and the second time segment are different time segments in which the client obtains the data packets of the target call service, and the intersection set of the first time segment and the second time segment is empty. The client may separately determine the first feature parameter corresponding to the first data packet set and the second feature parameter corresponding to the second data packet set, and separately calculate, based on the preset audio and/or video quality evaluation algorithm, the audio and/or video quality corresponding to the first feature parameter, and the audio and/or video quality corresponding to the second feature parameter. To be specific, time segments are classified for the target call service, and MOS evaluation may be separately performed based on the feature parameters in the classified different time segments, to improve accuracy of an evaluation result of voice and video quality.

In this embodiment of this application, based on that moments at which the client obtains the data packets of the target call service belong to different time segments, when the data packets of the target call service are classified, the client first determines whether the status information of the terminal in the different time segments changes. Based on whether the status information of the terminal changes, there are different manners of classifying the data packets. For example, when the status information of the terminal changes, the data packets are classified according to a preset status slice rule. The following first describes a manner in which the client classifies the data packets according to the preset status slice rule when the status information of the terminal in the different time segments changes.

In this embodiment of this application, the status information of the terminal includes the location information of the terminal, a call feature of the data packet, and the like. Based on different status information, there are different manners of classifying the data packets. The following separately provides descriptions:
1. When the first location information corresponding to the terminal when the client obtains the first data packet is different from the second location information corresponding to the terminal when the client obtains the second data packet, the client may classify the first data packet and the second data packet according to the preset location slice rule, the first location information, and the second location information.

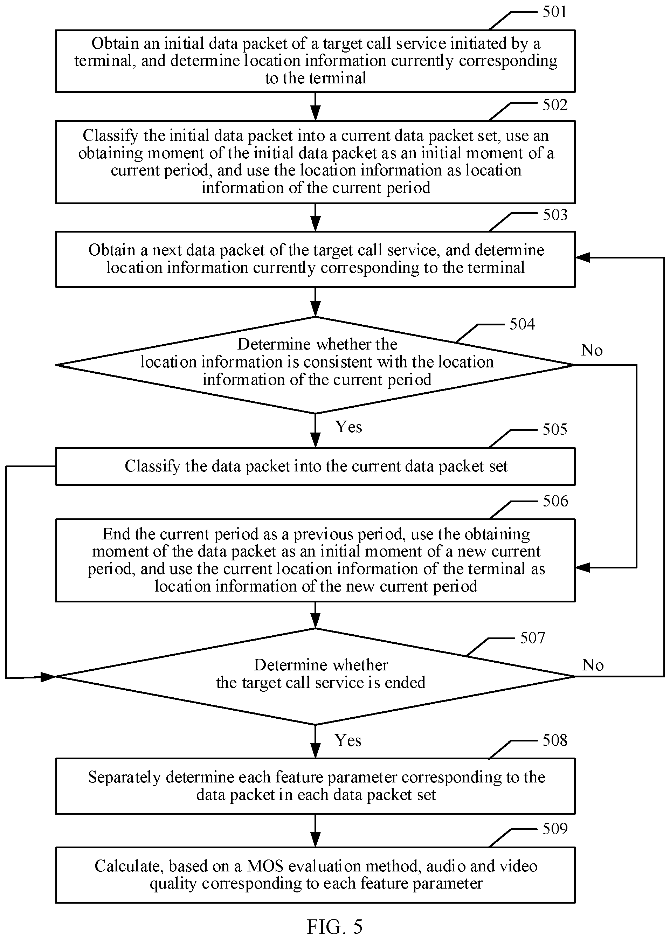

In this embodiment, when the first location information corresponding to the terminal when the client obtains the first data packet is different from the second location information corresponding to the terminal when the client obtains the second data packet, the client may classify the first data packet into the first data packet set and classify the second data packet into the second data packet set according to the preset location slice rule, the first location information, and the second location information. For specifics, refer to FIG. 5. Another embodiment of a data processing method in the embodiments of this application includes:
501: Obtain an initial data packet of a target call service initiated by a terminal, and determine location information currently corresponding to the terminal.

When a terminal is registered with a network and initiates a target call service, the network allocates a corresponding bearer or PDP context to a user. The terminal may transmit a data packet in the network through the bearer or the PDP context. The data packet may carry voice data or video data, that is, the data packet of the target call service includes a data packet carrying voice data and/or a data packet carrying video data. Specifics are not limited herein. The data packets may be transferred to a called terminal through transparent transmission of an access network element and a core network element. In a process of transferring the data packet of the target call service, the client may obtain the data packet of the target call service. The client may be a terminal, and a data obtaining module of the terminal may obtain a data packet sent by the terminal. The client may be a network element, for example, an MGW, that the data packet of the target call service passes through in a transfer process. The MGW may obtain a data packet through mirroring when receiving a data packet sent by the terminal. The client may be further a probe server, and the probe server may capture a data packet by using a network probe. Specifics are not limited herein. The client may further include a data analysis server that performs further processing, such as aggregation, association, and classification based on cities, on a result obtained by the client after MOS evaluation. Specifics are not limited herein.

It may be understood that the client may obtain the data packet of the target call service on a corresponding interface, for example, an S1-U interface, a Gm interface, or an Mw interface. This depends on a status of the client. Specifics are not limited herein.

A direction of sending a data packet by the terminal may be referred to as an uplink direction, and a direction of receiving a data packet by the terminal may be referred to as a downlink direction. The target call service includes a data packet of the uplink direction, and also includes a data packet of the downlink direction. The client may recognize the data packet of the target call service by using a source IP address, a source port number, a destination IP address, and a destination port number of the data packet, and may preset a source IP address, a source port number, a destination IP address, and a destination port number of the target call service. After obtaining a data packet whose source IP address, source port number, destination IP address, and destination port number are respectively consistent with the preset source IP address, source port number, destination IP address, and destination port number, the client determines that the data packet is a data packet of the target call service. Because the data packet of the target call service is bidirectional, after obtaining a data packet whose source IP address is the same as the preset destination IP address, whose target IP address is the same as the preset source IP address, whose destination port number is the same as the preset source port number, and whose source port number is the same as the preset destination port number, the client also determines that the data packet is a data packet of the target call service. It should be noted that when the data packet includes an RTP data packet and an RTCP data packet, the source IP address, the source port number, the destination IP address, and the destination port number of the target call service may be preset based on a source IP address, a source port number, a destination IP address, and a destination port number of the RTP data packet. When obtaining a data packet, if determining that a source IP address and a destination IP address of the data packet are consistent with the preset source IP address and destination IP address, and determining that a source port number of the data packet is equal to the preset source port number plus 1 and a destination port number of the data packet is equal to the preset destination port number plus 1, the client may determine that the data packet is a data packet of the target call service and the data packet is an RTCP data packet. Because the data packet of the target call service is bidirectional, when obtaining a data packet, if determining that a source IP address of the data packet is consistent with the preset destination IP address and a destination IP address of the data packet is consistent with the preset source IP address, and determining that a source port number of the data packet is equal to the preset destination port number plus 1 and a destination port number of the data packet is equal to the preset source port number plus 1, the client may determine that the data packet is a data packet of the target call service and the data packet is an RTCP data packet.

The location information of the terminal may be a cell of the terminal, or may be a grid of the terminal, or may be an interface network element that the data packet of the target call service passes through. Specifics are not limited herein. The location information of the terminal may be determined based on a signaling message of the target call service. The signaling message may be a SIP message or an SDP message, or may be another signaling message. Specifics are not limited herein.

502: Classify the initial data packet into a current data packet set, use an obtaining moment of the initial data packet as an initial moment of a current period, and use the location information as location information of the current period.

After obtaining the initial data packet of the target call service, the client may classify the initial data packet to the current data packet set, use the obtaining moment of the initial data packet as the initial moment of the current period, and use the current location information of the terminal as the location information corresponding to the current period.

503: Obtain a next data packet of the target call service, and determine location information currently corresponding to the terminal.

In this embodiment, after obtaining the initial data packet of the target call service described in step 502, the client may continue to obtain the next data packet of the target call service and determine the current location information of the terminal based on a signaling message.

504: Determine whether the location information is consistent with the location information of the current period, and if the location information is consistent with the location information of the current period, perform step 505, or if the location information isn't consistent with the location information of the current period, perform step 506.

The client may determine whether the current location information of the terminal described in step 503 is consistent with the location information corresponding to the current period. If the current location information of the terminal described in step 503 is consistent with the location information corresponding to the current period, the client determines that the location information of the terminal does not change, and may perform step 505. If the current location information of the terminal described in step 503 is inconsistent with the location information corresponding to the current period, the client determines that the location information of the terminal changes, and may perform step 506.

505: Classify the data packet into the current data packet set.

In this embodiment, when determining that the current location information of the terminal is consistent with the location information corresponding to the current period, the client may classify the data packet described in step 503 into the current data packet set, and the current period continues.

506: End the current period as a previous period, use the obtaining moment of the data packet as an initial moment of a new current period, and use the current location information of the terminal as location information of the new current period.

When determining that the current location information of the terminal is inconsistent with the location information corresponding to the current period, the client determines that the location information of the terminal changes. The client may determine that the current period is ended as a previous period, determine that the current data packet set becomes a previous data packet set, and use the obtaining moment of the data packet described in step 503 as the initial moment of the new current period. If the data packet described in step 503 is an RTP data packet or an HTTP data packet, the data packet is classified into the new current data packet set. If the data packet is an RTCP data packet, the data packet is classified into the previous data packet set. However, depending on a status, a next data packet subsequently received starts to be classified into the new current data packet set. The client uses the current location information of the terminal as the location information corresponding to the new current period.

The client may separately classify an uplink-direction data packet to each uplink data packet set, and separately classify a downlink-direction data packet to each downlink data packet set. The client may alternatively not distinguish the uplink-direction data packet and the downlink-direction data packet, and classify both the uplink-direction data packet and the downlink-direction data packet to each data packet set. The data packet described in the foregoing steps may include the uplink-direction data packet and the downlink-direction data packet. Specifics are not limited herein.

The data packet may include an RTP data packet carrying audio data and video data and an RTCP data packet carrying RTP statistical information, or the data packet may be an HTTP data packet carrying audio data. Specifics are not limited herein. In this embodiment and a subsequent embodiment, only the RTP data packet and the RTCP data packet are used as an example for description.

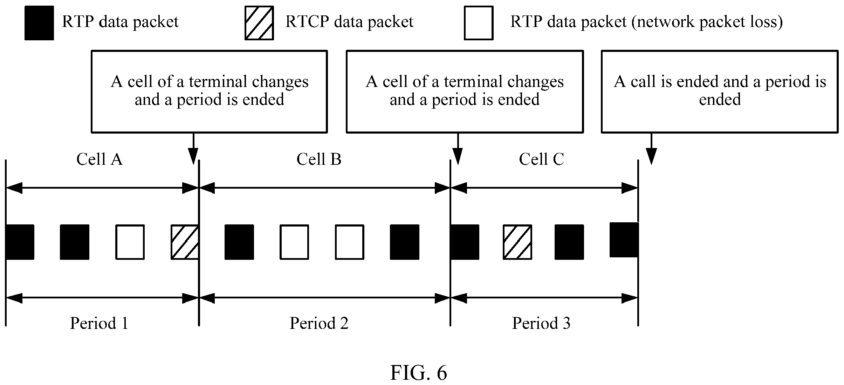

Referring to FIG. 6, the cell of the terminal is used as an example of the location information of the terminal for description, and classifying a unidirectional (an uplink direction or a downlink direction) data packet by the client is used as an example for description. The client classifies a unidirectional RTP data packet and a unidirectional RTCP data packet (the RTP data packet and the RTCP data packet have opposite directions) of the target call service based on the location information. When receiving the RTCP data packet, the client finds that the cell of the terminal changes and the terminal enters to a cell B from a cell A, determines that the current period (period 1) is ended as a previous period and the current data packet set becomes a previous data packet set, uses an obtaining moment of the RTCP data packet as an initial moment of a new current period (period 2), classifies the RTCP data packet to a previous data packet set, and starts to classify a next RTP data packet of the RTCP data packet into a new current data packet set. When receiving the RTP data packet, the client finds that the cell of the terminal changes and the terminal enters a cell C from the cell B, determines that the current period (period 2) is ended as a previous period, uses the current data packet set as a previous data packet set, uses an obtaining moment of the RTP data packet as an initial moment of a new current period (period 3), and classifies the RTP data packet into a new current data packet set.

507: Determine whether the target call service is ended, and if the target call service is ended, perform step 508, or if the target call service is not ended, perform step 503.

The client may determine, based on that neither the RTP data packet nor the RTCP data packet of the target call service is received within preset duration, that the target call service is ended. The preset duration may be 5s or 10s. Specifics are not limited herein. The client may further separately set duration based on the uplink direction and the downlink direction. Specifics are not limited herein. Referring to FIG. 6, the client determines that the target call service is ended and the current period (period 3) is ended. If receiving neither the RTP data packet nor the RTCP data packet of the target call service within the preset duration, the client determines that the target call service is ended, and the client may perform step 508. If receiving the RTP data packet or the RTCP data packet of the target call service within the preset duration, the client determines that the target call service is not end, and the client may perform step 503.

508: Separately determine each feature parameter corresponding to the data packet in each data packet set.

In this embodiment, the client may determine the feature parameter corresponding to the data packet in each data packet set. The feature parameter includes transmission indicators such as a delay, a jitter, and a packet loss of the data packet in each data packet set, and further includes call features such as a coding/decoding type, an audio code rate, and a video resolution. Details of a determining method are not described herein again.

It may be understood that, when each feature parameter corresponding to the data packet in each data packet set is determined, an uplink-direction feature parameter and a downlink-direction feature parameter of each data packet may be determined. Specifics are not limited herein.

509: Calculate, based on a MOS evaluation method, audio and/or video quality corresponding to each feature parameter.

In this embodiment, the client may calculate, based on a MOS evaluation method of a common standard, the audio and/or video quality corresponding to each feature parameter of each data packet set. Details are not described herein again.

In this embodiment, if determining that the location information of the terminal changes in a process of the target call service, the client may classify data packets of different location information into different sets, separately determine a feature parameter corresponding to a data packet set of each piece of location information, and separately perform MOS evaluation on each feature parameter, to help precisely position a location with relatively poor perception, to improve accuracy of an evaluation result of voice and video quality.

2. When the first call feature corresponding to the first data packet is different from the second call feature corresponding to the second data packet, the client may classify the first data packet and the second data packet according to the preset call feature slice rule, the first call feature, and the second call feature.

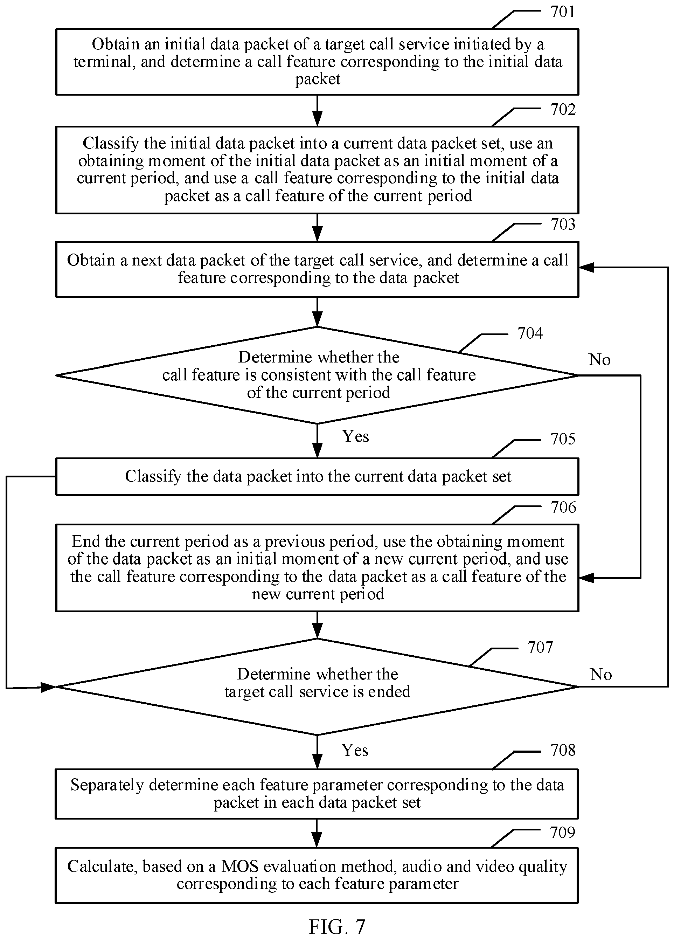

In this embodiment, when the first call feature corresponding to the first data packet obtained by the client is different from the second call feature corresponding to the second data packet obtained by the client, the client may classify the first data packet into the first data packet set and classify the second data packet into the second data packet set according to a preset call feature slice rule, the first call feature, and the second call feature. For specifics, refer to FIG. 7. Another embodiment of a data processing method in the embodiments of this application includes:

701: Obtain an initial data packet of a target call service initiated by a terminal, and determine a call feature corresponding to the initial data packet.

The obtaining, by the client, the initial data packet of the target call service initiated by the terminal is similar to that described in step 501 in FIG. 5. Details are not described herein again.

The call feature corresponding to the data packet may be a coding/decoding type of an RTP data packet, or may be an audio code rate of an RTP data packet, or may be a video resolution of an RTP data packet, or may be whether a packet loss exceeds a specified value, whether a packet interval exceeds a specified value, and the like. Specifics are not limited herein. There are a plurality of coding/decoding types of an RTP data packet. Common coding/decoding types of VoLTE voice include AMR and AMR-WB, and common coding/decoding types of a video include H264 and H265. The audio code rate is a quantity of bits coded or decoded for each second. One coding/decoding type may have a plurality of code rates. For example, the AMR-NB may use seven code rates. The call feature of the data packet may be determined based on a signaling message of the target call service, and the signaling message may be a SIP message or an SDP message, or may be another signaling message. Specifics are not limited herein. The call feature of the data packet may further be determined based on the data packet itself. For example, an RTP data packet carries call feature information. Specifics are not limited herein. For example, the initial RTP data packet carries voice data. After receiving the RTP data packet, the client determines whether the voice data carried in the RTP data packet is a silence frame or a voice frame. If the voice data carried in the RTP data packet is a silence frame, the following step 702 is not performed and the following step 703 is performed. If the voice data carried in the RTP data packet is a voice frame, the client may determine a code rate used for the voice frame of the initial RTP data packet. For another example, the initial RTP data packet carries video data. After receiving the RTP data packet, the client determines a video resolution used for an SPS frame carried in the RTP data packet.

It should be noted that the coding/decoding type corresponding to the RTCP data packet is a coding/decoding type that is of an RTP data packet and that corresponds to statistical information carried by the RTCP data packet.

702: Classify the initial data packet into a current data packet set, use an obtaining moment of the initial data packet as an initial moment of a current period, and use a call feature corresponding to the initial data packet as a call feature of the current period.

After obtaining the initial data packet of the target call service, the client may classify the initial data packet to the current data packet set, use the obtaining moment of the initial data packet as the initial moment of the current period, and use the call feature corresponding to the initial data packet as the call feature corresponding to the current period.

703: Obtain a next data packet of the target call service, and determine a call feature corresponding to the data packet.

In this embodiment, step 703 is similar to step 503 described in FIG. 5. Details are not described herein again.

704: Determine whether the call feature is consistent with the call feature of the current period, and if the call feature is consistent with the call feature of the current period, perform step 705, or if the call feature isn't consistent with the call feature of the current period, perform step 706.

The client may determine whether the call feature corresponding to the data packet described in step 703 is consistent with the call feature of the current period. If the call feature corresponding to the data packet described in step 703 is consistent with the call feature of the current period, the client determines that the call feature corresponding to the data packet changes, and may perform step 705. If the call feature corresponding to the data packet described in step 703 is inconsistent with the call feature of the current period, the client determines that the call feature corresponding to the data packet changes, and may perform the step 706.

705: Classify the data packet into the current data packet set.

In this embodiment, when the client determines that the call feature corresponding to the data packet is consistent with the call feature corresponding to the current period, the client may classify the data packet described in step 703 into the current data packet set, and the current period continues.

706: End the current period as a previous period, use the obtaining moment of the data packet as an initial moment of a new current period, and use the call feature corresponding to the data packet as a call feature of the new current period.

When determining that the call feature corresponding to the data packet is inconsistent with the call feature corresponding to the current period, the client determines that the call feature of the data packet changes. The client may determine that the current period is ended as a previous period, determine that the current data packet set becomes a previous data packet set, and use the obtaining moment of the data packet described in step 703 as the initial moment of the new current period. If the data packet is an RTP data packet, the client classifies the data packet into the new current data packet set, and if the data packet described in step 703 is an RTCP data packet, classifies the data packet into the previous data packet set. However, depending on a status, a next data packet subsequently received starts to be classified into the new current data packet set. The client uses the call feature corresponding to the data packet described in step 703 as the call feature corresponding to the new current period.

The data packet described in the foregoing step may include only an uplink-direction RTP data packet (if an RTCP data packet is included, a downlink RTCP data packet is further included), or may include only a downlink-direction RTP data packet (if an RTCP data packet is included, an uplink RTCP data packet is further included). To be specific, the client may separately classify an uplink-direction data packet to each uplink data packet set, and separately classify a downlink-direction data packet to each downlink data packet set. The client may alternatively not distinguish the uplink-direction data packet and the downlink-direction data packet, and classify both the uplink-direction data packet and the downlink-direction data packet to each data packet set. The data packet described in the foregoing steps includes an uplink-direction RTP data packet, a downlink-direction RTCP data packet, a downlink-direction RTP data packet, and an uplink-direction RTCP data packet. Specifics are not limited herein.

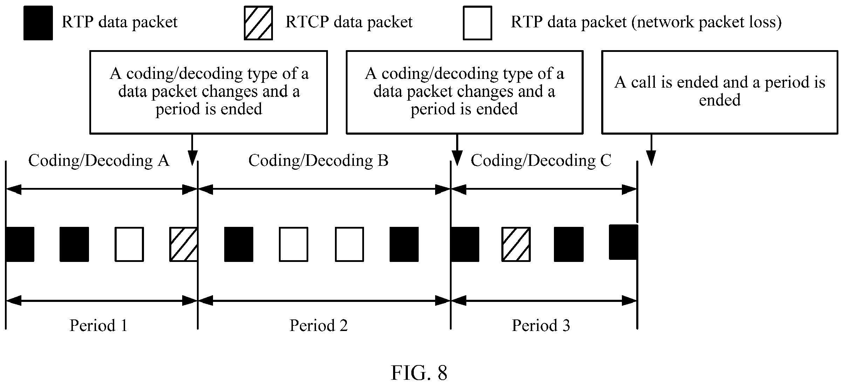

Referring to FIG. 8, a coding/decoding type of an RTP data packet is used as an example of a call feature for description, and classifying a unidirectional (an uplink direction or a downlink direction) data packet by the client is used as an example for description. The client classifies a unidirectional RTP data packet and a unidirectional RTCP data packet (the RTP data packet and the RTCP data packet have opposite directions) of the target call service based on the coding/decoding type. When receiving the RTCP data packet, the client finds that the coding/decoding type of the data packet changes and changes from coding/decoding A to coding/decoding B, determines that the current period (period 1) is ended as a previous period and the current data packet set becomes a previous data packet set, uses an obtaining moment of the RTCP data packet as an initial moment of a new current period (period 2), classifies the RTCP data packet to a previous data packet set, and starts to classify a next RTP data packet of the RTCP data packet into a new current data packet set. When receiving the RTP data packet, the client finds that the coding/decoding type of the data packet changes and changes from the coding/decoding B to coding/decoding C, determines that the current period (period 2) is ended as a previous period, uses the current data packet set as a previous data packet set, uses an obtaining moment of the RTP data packet as an initial moment of a new current period (period 3), and classifies the RTP data packet to a new current data packet set.

Step 707 to step 709 are similar to step 507 to step 509 described in FIG. 5. Details are not described herein again.

In this embodiment, if determining that the call feature of the data packet changes in a process of the target call service, the client may classify data packets of different call features into different sets, separately determine a feature parameter corresponding to a data packet set of each call feature, and separately perform MOS evaluation on each feature parameter. MOS evaluation based on different call features helps improve accuracy of an evaluation result of voice and video quality, and helps position a reason for relatively poor perception.

In this embodiment of this application, based on that moments at which the client obtains the data packets of the target call service belong to different time segments, when the data packets of the target call service are classified, the client may first determine whether the status information of the terminal in the different time segments changes. Based on whether the status information of the terminal changes, there may be different manners of classifying the data packets. For example, when the status information of the terminal does not change, the data packets may be classified according to a preset time slice rule. The following describes a manner in which the client classifies the data packets according to the preset time slice rule when the status information of the terminal in the different time segments does not change.

3. The client classifies the first data packet and the second data packet according to the preset first time slice rule, the first obtaining moment at which the client obtains the first data packet, and the second obtaining moment at which the client obtains the second data packet. When obtaining a third data packet between obtaining of the first data packet and the second data packet, the client classifies the first data packet and the second data packet according to the preset second time slice rule, the first obtaining moment, the second obtaining moment, and a third obtaining moment at which the client obtains the third data packet.

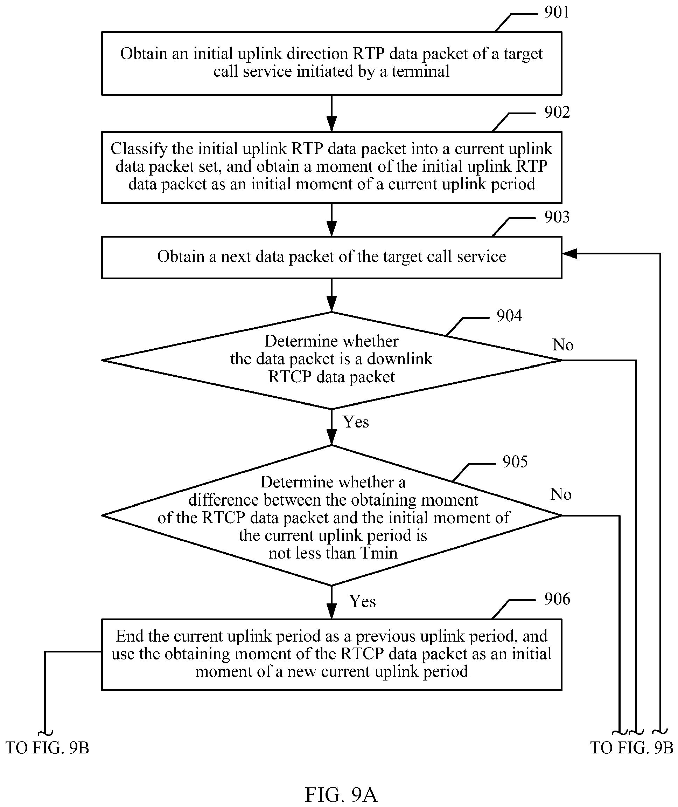

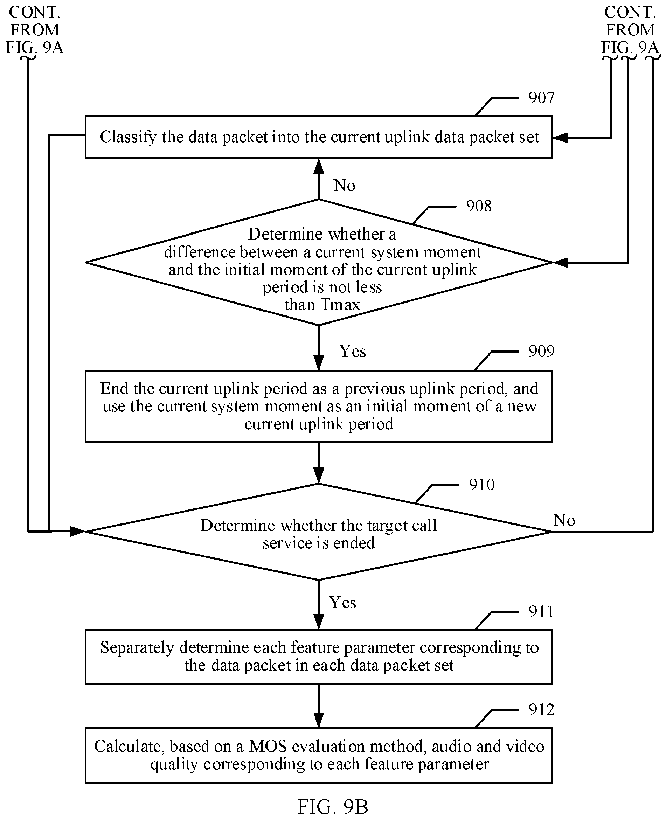

In this embodiment, the client may classify the first data packet into the first data packet set and classify the second data packet into the second data packet set according to the preset first time slice rule, the first moment at which the client obtains the first data packet, and the second moment at which the client obtains the second data packet. When obtaining the third data packet between obtaining of the first data packet and the second data packet, the client classifies the first data packet into the first data packet set and classifies the second data packet into the second data packet set according to a second time slice rule, the first moment, the second moment, and the third moment at which the client obtains the third data packet. For specifics, refer to FIG. 9A and FIG. 9B. Another embodiment of a data processing method in the embodiments of this application includes:

901: Obtain an initial uplink-direction RTP data packet of a target call service initiated by a terminal.

In this embodiment, step 901 is similar to the foregoing step 501, and details are not described herein again. It should be understood that the data packet of the target call service may be bidirectional. When classifying data packets of the target call service into each data packet set, the client may distinguish uplink and downlink directions of the data packets of the target call service, or the client may not distinguish uplink and downlink directions of the data packets of the target call service. Specifics are not limited herein. In this embodiment and a subsequent embodiment, only distinguishing the uplink and downlink directions of the data packets of the target call service by the client is used as an example for description.

The client may obtain the initial uplink-direction RTP data packet of the target call service. Optionally, before obtaining the initial uplink-direction RTP data packet of the target call service, the client may obtain an RTCP downlink-direction data packet of the target call service, that is, an initial unidirectional data packet of the target call service that is obtained by the client is an RTCP data packet. Specifics are not limited herein. In this embodiment and a subsequent embodiment, only an example in which the initial unidirectional data packet of the target call service that is obtained by the client is an RTP data packet is used for description, and the uplink direction is used as an example for description.

902: Classify the initial uplink RTP data packet into a current uplink data packet set, and obtain an obtaining moment of the initial uplink RTP data packet as an initial moment of a current uplink period.

After obtaining the initial uplink-direction RTP data packet of the target call service, the client may classify the initial uplink RTP data packet into the current uplink data packet set, and use the obtaining moment of the initial uplink RTP data packet as the initial moment of the current uplink period.

903: Obtain a next data packet of the target call service.

In this embodiment, the client may obtain the next data packet of the target call service, where the next data packet may be an uplink-direction RTP data packet, or may be a downlink-direction RTCP data packet. Specifics are not limited herein.

904: Determine whether the data packet is a downlink RTCP data packet, and if the data packet is a downlink RTCP data packet, perform step 905, or if the data packet isn't a downlink RTCP data packet, perform step 908.

The client may determine whether the data packet described in the foregoing step 903 is a downlink RTCP data packet, and if the data packet in the step 903 is a downlink RTCP data packet, perform step 905, or if the data packet in the step 903 is not a downlink RTCP data packet, perform step 908.

905: Determine whether a difference between an obtaining moment of the downlink RTCP data packet and the initial moment of the current uplink period is not less than Tmin, and if the difference between the obtaining moment of the downlink RTCP data packet and the initial moment of the current uplink period is not less than Tmin, perform step 906, or if no, perform step 907.

If determining that the data packet described in step 903 is a downlink RTCP data packet, the client may determine whether the difference between the obtaining moment of the downlink RTCP data packet and the initial moment of the current uplink period is not less than Tmin, and if the difference between the obtaining moment of the downlink RTCP data packet and the initial moment of the current uplink period is not less than Tmin, perform step 906, or if the difference between the obtaining moment of the downlink RTCP data packet and the initial moment of the current uplink period is less than Tmin, perform step 907.

A value of Tmin may be static or may be dynamic. Specifics are not limited herein. The value of Tmin may be determined based on a network status, may be determined based on a using scenario, or may be randomly determined by a person. Specifics are not limited herein. The value may be 5s, 8s, or the like. Specifics are not limited herein.

906: End the current uplink period as a previous uplink period, and use the obtaining moment of the RTCP data packet as an initial moment of a new current uplink period.

If determining that the difference between the obtaining moment of the downlink RTCP data packet and the initial moment of the current uplink period described in step 905 is not less than Tmin, the client may determine that the current uplink period is ended as the previous uplink period, determine the current uplink data packet set as the previous uplink data packet set, use the obtaining moment of the downlink RTCP data packet as the initial moment of the new uplink current period, and classify the RTCP data packet into the previous uplink data packet set.

907: Classify the data packet into the current uplink data packet set.

The client may determine that the current uplink period continues, and classify the current data packet into the current uplink data packet set.

908: Determine whether a difference between a current system moment and the initial moment of the current uplink period is not less than Tmax, and if the difference is not less than Tmax, perform step 909, or if the difference is less than Tmax, perform step 907.

In this embodiment, if determining that the data packet described in step 903 is not a downlink RTCP data packet, the client may determine whether the difference between the current system moment and the initial moment of the current uplink period is not less than Tmax, and if the difference is not less than Tmax, the client may perform step 909, or if the difference is less than Tmax, the client may perform step 907.

Optionally, the client may alternatively determine, every N seconds, whether the difference between the current system moment and the initial moment of the current uplink period is not less than Tmax, and if the difference is not less than Tmax, the client may perform step 909, or if the difference is less than Tmax, the client may perform step 907. The client does not necessarily perform, when determining that the obtained data packet is not an RTCP data packet, the action of determining whether the difference between the current system moment and the initial moment of the current uplink period is not less than Tmax.

A value of N may be static or may be dynamic. Specifics are not limited herein. The value of N may be determined based on a network status, may be determined based on a using scenario, or may be randomly determined by a person. Specifics are not limited herein. The value may be 0.5, 1, 1.5, or the like. Specifics are not limited herein.

A value of Tmax may be static or may be dynamic. Specifics are not limited herein. The value of Tmax may be determined based on a network status, may be determined based on a using scenario, or may be randomly determined by a person. Specifics are not limited herein as long as it is ensured that Tmax is not less than Tmin. The value of Tmax may be 8s, 10s, or the like. Specifics are not limited herein.

Optionally, the value of Tmax may be the same as that of Tmin. Specifics are not limited herein

909: End the current uplink period as a previous uplink period, and use the current system moment as the initial moment of the new current uplink period.

If determining that the difference between the current system moment and the initial moment of the current uplink period is not less than Tmax in step 908, the client may determine that the current uplink period is ended as the previous uplink period, determine that the current uplink data packet set becomes the previous uplink data packet set, and use the current system moment as the initial moment of the new current uplink period.

It may be understood that step 908 and step 909 are optional and may not be performed. Specifics are not limited herein. When step 908 and step 909 are not performed, the data packet of the target call service is classified in step 905 to step 907, and the RTCP data packet is used to implement classification of a data packet set. Preferably, to avoid that there is always no RTCP data packet, step 908 and step 909 are performed.

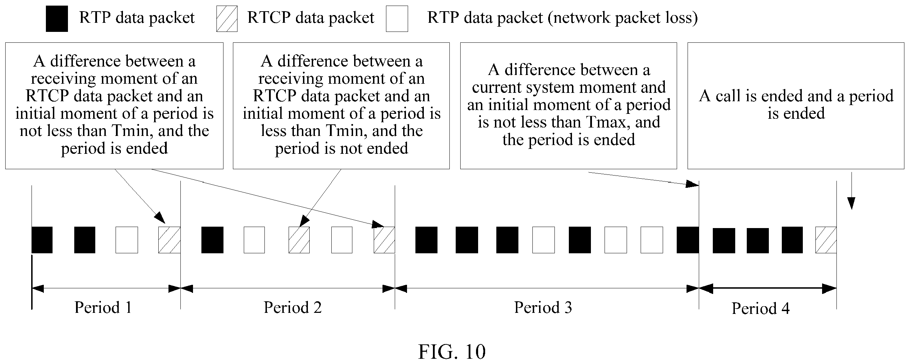

Referring to FIG. 10, a client classifies a unidirectional RTP data packet and a unidirectional RTCP data packet (the RTP data packet and the RTCP data packet have opposite directions) of a target call service based on an obtaining moment of the RTCP data packet and a system moment. The client receives a downlink RTCP data packet, and determines that a difference between an obtaining moment of the downlink RTCP data packet and an initial moment of a current uplink period (period 1) is not less than Tmin. In this case, the current uplink period (period 1) is ended as a previous uplink period, and a current uplink data packet set becomes a previous uplink data packet set. The client uses the obtaining moment of the downlink RTCP data packet as an initial moment of a new current uplink period (period 2), and classifies the downlink RTCP data packet into the previous uplink data packet set. When the client determines that the difference between the current system moment and the initial moment of the current uplink period (period 3) is not less than Tmax, the current uplink period (period 3) is ended as the previous uplink period, and the current uplink data packet set becomes the previous uplink data packet set.

In this embodiment, step 910 to step 912 are similar to step 507 to step 509 described in FIG. 5. Details are not described herein again.

It may be understood that in this embodiment, classifying an uplink RTP data packet and a downlink RTCP data packet of the target call service to each uplink data packet set is used as an example for description. A method of classifying a downlink RTP data packet and an uplink RTCP data packet of the target call service to each downlink data packet set is similar. Details are not described herein again.

In this embodiment, the client may classify data packets of the target call service into different sets according to a time slice rule, determine a feature parameter corresponding to each of different data packet sets, and estimate voice and video quality corresponding to each feature parameter, to improve accuracy of an evaluation result of voice and video quality.

In this embodiment of this application, when determining that the status information of the terminal in different time segments changes, when classifying a data packet according to a preset status slice rule, the client may alternatively classify the data packet with reference to a preset time slice rule. For example, when the location information of the terminal changes, the client may classify the data packet with reference to both a location slice rule and a time slice rule. The following provides specific descriptions.

It may be understood that when determining that the status information of the terminal in different time segments changes, the client may alternatively classify the time packet not according to the preset status slice rule, and instead classify the time packet according to a selected preset time slice rule. Specifics are not limited herein.

4. The first data packet and the second data packet are classified with reference to both the preset first time slice rule or the preset second time slice rule and the preset call feature slice rule or the preset location slice rule.

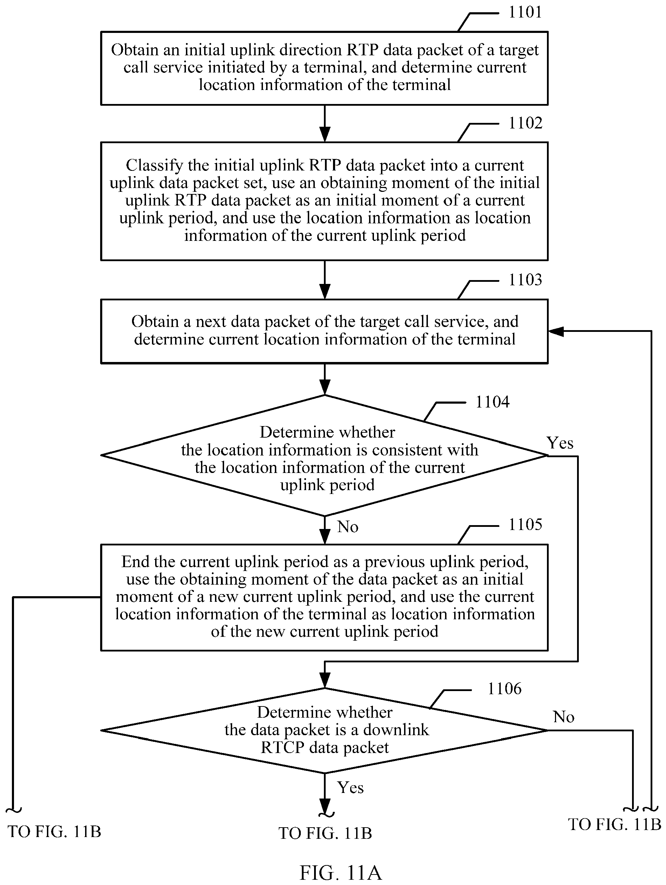

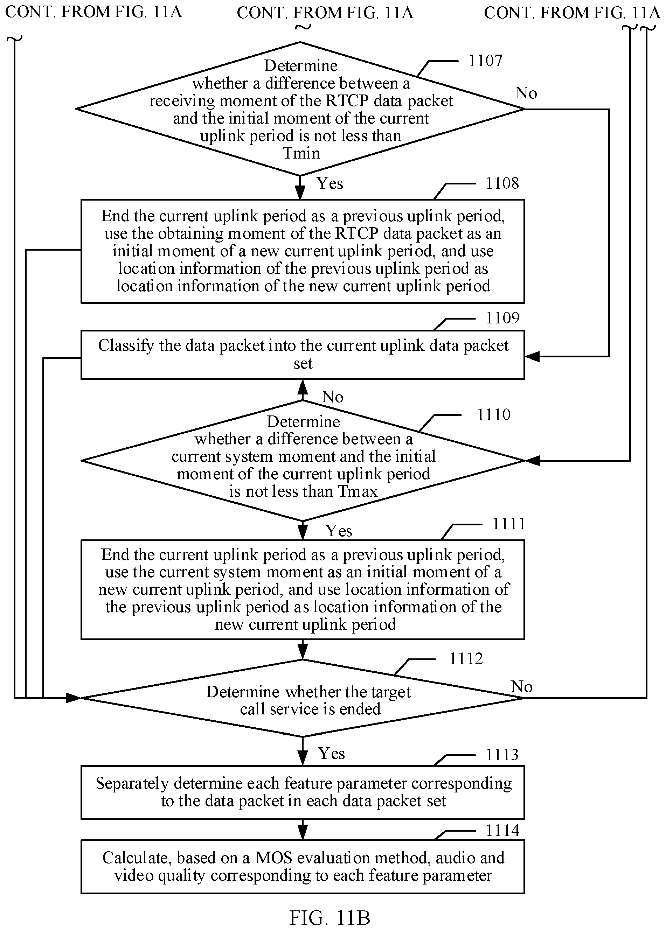

In this embodiment, when the first location information corresponding to the terminal when the client obtains the first data packet is different from the second location information corresponding to the terminal when the client obtains the second data packet, the client may classify the first data packet into the first data packet set and classify the second data packet into the second data packet set according to the preset location slice rule and the first time slice rule or the second time slice rule. For specifics, refer to FIG. 11A and FIG. 11B. Another embodiment of a data processing method in the embodiments of this application includes:

1101: Obtain an initial uplink-direction RTP data packet of a target call service initiated by a terminal, and determine current location information of the terminal.

In this embodiment, obtaining, by the client, the initial uplink-direction RTP data packet of the target call service initiated by the terminal is similar to that in step 901 described in FIG. 9A and FIG. 9B. Details are not described herein again. Determining the current location information of the terminal is similar to step 501 described in FIG. 5. Details are not described herein again.

1102: Classify the initial uplink RTP data packet into a current uplink data packet set, use an obtaining moment of the initial uplink RTP data packet as an initial moment of a current uplink period, and use the location information as location information of the current uplink period.

After obtaining the initial uplink-direction RTP data packet of the target call service, the client may classify the initial uplink RTP data packet into the current uplink data packet set, use the obtaining moment of the initial uplink RTP data packet as the initial moment of the current uplink period, and use the current location information of the terminal as location information of the current uplink period.

1103: Obtain a next data packet of the target call service, and determine current location information of the terminal.

In this embodiment, the client may obtain the next data packet of the target call service. The next data packet may be an uplink-direction RTP data packet, or may be a downlink-direction RTCP data packet. Specifics are not limited herein. The client may determine the current location information that is of the terminal and that exists when the terminal obtains the next data packet of the target call service.

1104: Determine whether the location information is consistent with the location information of the current uplink period, and if the location information is consistent with the location information of the current uplink period, perform step 1106, or if the location information isn't consistent with the location information of the current uplink period, perform step 1105.

The client may determine whether the current location information of the terminal described in step 1103 is consistent with the location information corresponding to the current uplink period. If the current location information of the terminal described in step 1103 is consistent with the location information corresponding to the current uplink period, the client determines that the location information of the terminal does not change, and may perform step 1106. If the current location information of the terminal described in step 1103 is inconsistent with the location information corresponding to the current uplink period, the client determines that the location information of the terminal changes, and may perform step 1105.

1105: End the current uplink period as a previous uplink period, use the obtaining moment of the data packet as an initial moment of a new current uplink period, and use the current location information of the terminal as location information of the new current uplink period.

When determining that the current location information of the terminal is inconsistent with the location information corresponding to the current uplink period, the client determines that the location information of the terminal changes. The client may determine that the current uplink period is ended as a previous uplink period, determine that the current uplink data packet set becomes a previous uplink data packet set, use the obtaining moment of the data packet described in step 1103 as the initial moment of the new current uplink period, and use the current location information of the terminal as the location information corresponding to the new current uplink period. If the data packet described in step 1103 is an uplink RTP data packet, the data packet is classified into the new current uplink data packet set. If the data packet is a downlink RTCP data packet, the data packet is classified into the previous uplink data packet set. However, depending on a status, a next data packet subsequently received starts to be classified into the new current uplink data packet set.

1106: Determine whether the data packet is a downlink RTCP data packet, and if the data packet is a downlink RTCP data packet, perform step 1107, or if the data packet isn't a downlink RTCP data packet, perform step 1110.

When determining that the current location information of the terminal is consistent with the location information corresponding to the current period, the client determines that the location information of the terminal does not change. The client may determine whether the data described in step 1103 is a downlink RTCP data packet, and if the data described in step 1103 is a downlink RTCP data packet, perform step 1107, or if the data described in step 1103 isn't a downlink RTCP data packet, perform step 1110.

1107: Determine whether a difference between an obtaining moment of the downlink RTCP data packet and the initial moment of the current uplink period is not less than Tmin, and if the difference between the obtaining moment of the downlink RTCP data packet and the initial moment of the current uplink period is not less than Tmin, perform step 1108, or if no, perform step 1109.

If determining that the data packet described in step 1103 is a downlink RTCP data packet, the client may determine whether the difference between the obtaining moment of the downlink RTCP data packet and the initial moment of the current uplink period is not less than Tmin, and if the difference between the obtaining moment of the downlink RTCP data packet and the initial moment of the current uplink period is not less than Tmin, perform step 1108, or if the difference between the obtaining moment of the downlink RTCP data packet and the initial moment of the current uplink period is less than Tmin, perform step 1109.

A value of Tmin may be static or may be dynamic. Specifics are not limited herein. The value of Tmin may be determined based on a network status, may be determined based on a using scenario, or may be randomly determined by a person. Specifics are not limited herein. The value may be 5s, 8s, or the like. Specifics are not limited herein.

1108: End the current uplink period as a previous uplink period, use the obtaining moment of the RTCP data packet as an initial moment of a new current uplink period, and use location information of the previous uplink period as location information of the new current uplink period.

If determining that the difference between the obtaining moment of the downlink RTCP data packet and the initial moment of the current uplink period described in step 1107 is not less than Tmin, the client may determine that the current uplink period is ended as the previous uplink period, determine the current uplink data packet set as the previous uplink data packet set, use the obtaining moment of the downlink RTCP data packet as the initial moment of the new uplink current period, and classify the RTCP data packet into the previous uplink data packet set.

1109: Classify the data packet into the current uplink data packet set.

The client may determine that the current uplink period continues, and classify the current data packet into the current uplink data packet set.

1110: Determine whether a difference between a current system moment and the initial moment of the current uplink period is not less than Tmax, and if the difference is not less than Tmax, perform step 1111, or if the difference is less than Tmax, perform step 1109.

In this embodiment, if determining that the data packet described in step 1103 is not a downlink RTCP data packet, the client may determine whether the difference between the current system moment and the initial moment of the current uplink period is not less than Tmax, and if the difference is not less than Tmax, the client may perform step 1111, or if the difference is less than Tmax, the client may perform step 1109.

Optionally, the client may alternatively determine, every N seconds, whether the difference between the current system moment and the initial moment of the current uplink period is not less than Tmax, and if the difference is not less than Tmax, the client may perform step 1111, or if the difference is less than Tmax, the client may perform step 1109. The client does not necessarily perform, when determining that the obtained data packet is not an RTCP data packet, the action of determining whether the difference between the current system moment and the initial moment of the current uplink period is not less than Tmax.

A value of N may be static or may be dynamic. Specifics are not limited herein. The value of N may be determined based on a network status, may be determined based on a using scenario, or may be randomly determined by a person. Specifics are not limited herein. The value may be 0.5, 1, 1.5, or the like. Specifics are not limited herein.

A value of Tmax may be static or may be dynamic. Specifics are not limited herein. The value of Tmax may be determined based on a network status, may be determined based on a using scenario, or may be randomly determined by a person. Specifics are not limited herein as long as it is ensured that Tmax is not less than Tmin. The value of Tmax may be 8s, 10s, or the like. Specifics are not limited herein.

Optionally, the value of Tmax may be the same as that of Tmin. Specifics are not limited herein

1111: End the current uplink period as a previous uplink period, use the current system moment as an initial moment of a new current uplink period, and use location information of the previous uplink period as location information of the new current uplink period.

If determining that the difference between the current system moment and the initial moment of the current uplink period is not less than Tmax in step 1110, the client may determine that the current uplink period is ended as the previous uplink period, determine that the current uplink data packet set becomes the previous uplink data packet set, use the current system moment as the initial moment of the new current uplink period, and use the location information corresponding to the previous uplink period as the location information of the new current uplink period.

It may be understood that step 1110 and step 1111 are optional and may not be performed. Specifics are not limited herein. When step 1110 and step 1111 are not performed, the data packet of the target call service is classified in step 1107 to step 1109, and the RTCP data packet is used to implement classification of a data packet set. Preferably, to avoid that there is always no RTCP data packet, step 1110 and step 1111 are performed.

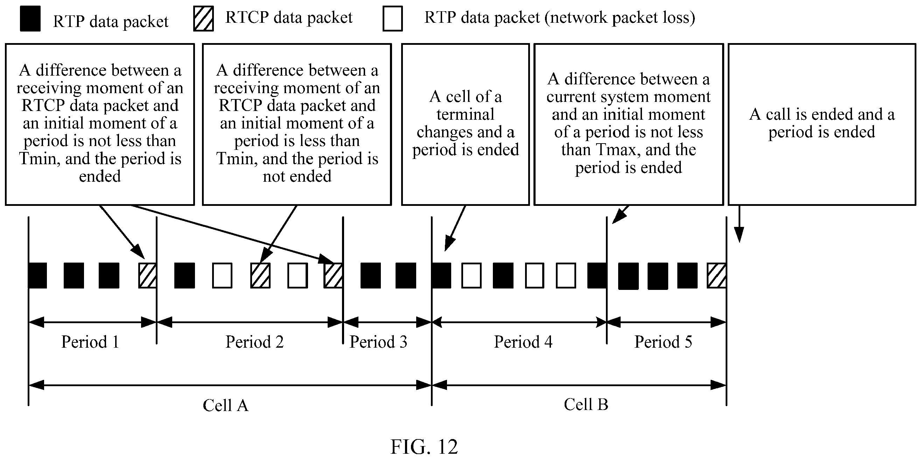

Referring to FIG. 12, a client classifies a unidirectional RTP data packet and a unidirectional RTCP data packet (the RTP data packet and the RTCP data packet have opposite directions) of a target call service based on an obtaining moment of the RTCP data packet, a system moment, and cell information of a terminal. The client receives a downlink RTCP data packet, and determines that a difference between an obtaining moment of the downlink RTCP data packet and an initial moment of a current uplink period (period 1) is not less than Tmin. In this case, the current uplink period (period 1) is ended as a previous uplink period, and a current uplink data packet set becomes a previous uplink data packet set. The client uses the obtaining moment of the downlink RTCP data packet as an initial moment of a new current uplink period (period 2), and classifies the downlink RTCP data packet to the previous uplink data packet set. When receiving an uplink RTP data packet, the client finds that a cell of the terminal changes and the terminal enters a cell B from a cell A, determines that the current uplink period (period 3) is ended as a previous uplink period and a current uplink data packet set becomes a previous uplink data packet set, uses an obtaining moment of the uplink RTP data packet as an initial moment of a new uplink current period (period 4), and classifies the uplink RTP data packet to a new current uplink data packet set. When the client determines that a difference between a current system moment and the initial moment of the current uplink period (period 4) is not less than Tmax, the current uplink period (period 4) is ended as a previous uplink period, and the current uplink data packet set becomes a previous uplink data packet set.

In this embodiment, step 1112 to step 1114 are similar to step 507 to step 509 described in FIG. 5. Details are not described herein again.

It may be understood that in this embodiment, classifying an uplink RTP data packet and a downlink RTCP data packet of the target call service to each uplink data packet set is used as an example for description. A method of classifying a downlink RTP data packet and an uplink RTCP data packet of the target call service to each downlink data packet set is similar. Details are not described herein again.

It may be understood that in this embodiment, the call feature of the data packet in the target call service may change or may not change. Specifics are not limited herein.

Preferably, if the call feature of the data packet of the target call service also changes, in this embodiment, data packet sets of the target call service may be further classified with reference to the change of the call feature of the data packet. Specifics are not limited herein. Refer to the specific steps described in FIG. 7, and details are not described herein again.

In this embodiment, the data packets of the target call service whose obtaining moments are in different time segments are classified into different data packet sets, feature parameters corresponding to different data packet sets are separately determined, and audio and/or video quality corresponding to each feature parameter is separately evaluated. To be specific, time segments are classified for the target call service, and MOS evaluation may be separately performed on the feature parameters in the classified different time segments. In addition, time segments may be classified for the target call service based on both a change of the location information of the terminal and a change of the call feature corresponding to the data packet of the target call service, to improve accuracy of an evaluation result of voice and video quality.

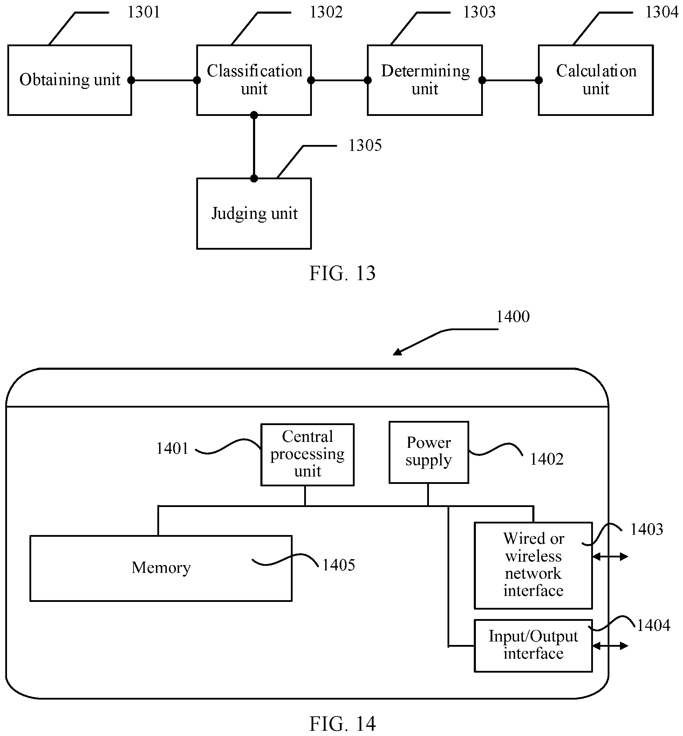

The foregoing describes the data processing method in the embodiments of this application, and the following describes a client in the embodiments of this application. Referring to FIG. 13, an embodiment of the client in the embodiments of this application includes:
an obtaining unit 1301, configured to obtain a data packet of a target call service initiated by a terminal;
a classification unit 1302, configured to: if the obtaining unit obtains a first data packet and a second data packet of the target call service, classify the first data packet into a first data packet set and classify the second data packet into a second data packet set based on a first time segment and a second time segment, where a first obtaining moment of the first data packet belongs to the first time segment, a second obtaining moment of the second data packet belongs to the second time segment, the first time segment and the second time segment are different time segments used by the obtaining unit to obtain the data packets of the target call service, and an intersection set of the first time segment and the second time segment is empty;
a determining unit 1303, configured to determine a first feature parameter corresponding to the first data packet set and a second feature parameter corresponding to the second data packet set; and
a calculation unit 1304, configured to calculate, based on a preset audio and/or video quality evaluation algorithm, audio and/or video quality corresponding to the first feature parameter, and audio and/or video quality corresponding to the second feature parameter.

In this embodiment, procedures performed by the units of the client are similar to those of the method performed by the client described in the embodiments shown in FIG. 7, FIG. 9A and FIG. 9B, and FIG. 11A and FIG. 11B. Details are not described herein again.

In this embodiment, if the obtaining unit 1301 obtains a first data packet and a second data packet of the target call service initiated by the terminal, the classification unit 1302 may classify the first data packet into a first data packet set and classify the second data packet into a second data packet set based on a first time segment and a second time segment, where a first obtaining moment of the first data packet belongs to the first time segment, a second obtaining moment of the second data packet belongs to the second time segment, the first time segment and the second time segment are different time segments used by the client to obtain the data packets of the target call service, and an intersection set of the first time segment and the second time segment is empty. The determining unit 1303 may separately determine the first feature parameter corresponding to the first data packet set and the second feature parameter corresponding to the second data packet set. The calculation unit 1304 may separately calculate, based on the preset audio and/or video quality evaluation algorithm, audio and/or video quality corresponding to the first feature parameter, and audio and/or video quality corresponding to the second feature parameter. That is, time segments are classified for the target call service, and MOS evaluation may be separately performed based on the feature parameters in the classified different time segments, to improve accuracy of an evaluation result of voice and video quality.

In this embodiment, the client further includes a judging unit 1305, configured to determine whether first status information of the terminal in the first time segment is the same as second status information of the terminal in the second time segment.

When the judging unit 1305 determines that the first status information is the same as the second status information, the classification unit 1302 may classify the first data packet into the first data packet set and classify the second data packet into the second data packet set according to a preset time slice rule.

The classification unit 1302 may classify the first data packet and the second data packet according to the preset time slice rule in the following several manners:
the classification unit 1302 is specifically configured to classify the first data packet into the first data packet set and classify the second data packet into the second data packet set according to a preset first time slice rule, the first obtaining moment, and the second obtaining moment, where an interval between the first obtaining moment and an obtaining moment of at least one data packet in the second data packet set is greater than a preset first duration threshold, an interval between the second obtaining moment and an obtaining moment of at least one data packet in the first data packet set is greater than the first duration threshold, an interval between obtaining moments of any two data packets in the first data packet set is not greater than the first duration threshold, and an interval between obtaining moments of any two data packets in the second data packet set is not greater than the first duration threshold; or
the classification unit 1302 is specifically configured to: if the obtaining unit 1301 obtains a third data packet of the target call service, classify the first data packet into the first data packet set and classify the second data packet into the second data packet set according to a preset second time slice rule, the first obtaining moment, the second obtaining moment, and a third obtaining moment of the third data packet, where the third obtaining moment belongs to the first time segment or the second time segment; and classify the third data packet into the first data packet set or the second data packet set according to the second time slice rule, the first obtaining moment, the second obtaining moment, and the third obtaining moment, where the third obtaining moment is earlier than obtaining moments of all data packets of one of the first data packet set and the second data packet set, and is later than obtaining moments of all data packets in the other data packet set, and an interval between the third obtaining moment and an obtaining moment of any data packet in the first data packet set or the second data packet set is not greater than a preset second duration threshold, where the first data packet includes a first RTP data packet; the second data packet includes a second RTP data packet; and the third data packet includes a first RTCP data packet.

When the judging unit 1305 determines that the first status information is different from the second status information, the classification unit 1302 may classify the first data packet into the first data packet set and classify the second data packet into the second data packet set according to a preset status slice rule.

The classification unit 1302 may classify the first data packet and the second data packet according to the preset status slice rule in the following several manners:
when the first status information includes first location information corresponding to the terminal when the obtaining unit obtains the first data packet, and the second status information includes second location information corresponding to the terminal when the obtaining unit obtains the second data packet, the classification unit 1302 is specifically configured to classify the first data packet into the first data packet set and classify the second data packet into the second data packet set according to a preset location slice rule, the first location information, and the second location information, where location information corresponding to the terminal when any data packet in the first data packet set is obtained by the client is the first location information, and location information corresponding to the terminal when any data packet in the second data packet set is obtained by the client is the second location information; or
when the first status information includes a first call feature corresponding to the first data packet, and the second status information includes a second call feature corresponding to the second data packet, the classification unit is specifically configured to classify the first data packet into the first data packet set and classify the second data packet into the second data packet set according to a preset call feature slice rule, the first call feature, and the second call feature, where a call feature corresponding to any data packet in the first data packet set is the first call feature, and a call feature corresponding to any data packet in the second data packet set is the second call feature.

Referring to FIG. 14, another embodiment of the client in the embodiments of this application includes: a client 1400 that may vary greatly because of a configuration or performance difference, and may include one or more central processing units (central processing units, CPU) 1401 (for example, one or more processors) and a memory 1405. The memory 1405 stores one or more application programs or data.

The memory 1405 may be a volatile storage or a persistent storage. The program stored in the memory 1405 may include one or more modules, and each module may include a series of instruction operations of the client. Still further, the central processing unit 1401 may be configured to communicate with the memory 1405 and perform a series of instruction operations of the memory 1405 on the client 1400.

The client 1400 may further include one or more power supplies 1402, one or more wired or wireless network interfaces 1403, one or more input/output interfaces 1404, and/or one or more operating systems, for example, Windows ServerTM, Mac OS XTM, UnixTM, LinuxTM, and FreeBSDTM.

In this embodiment, procedures performed by the central processing unit 1401 of the client 1400 are similar to those of the method described in the embodiments shown in FIG. 7, FIG. 9A and FIG. 9B, and FIG. 11A and FIG. 11B. Details are not described herein again.

According to an embodiment of this application, a computer storage medium is further provided. The computer storage medium is configured to store a computer software instruction used by the client, and includes a program designed for the client.

According to an embodiment of this application, a computer program product is provided. The computer program product includes a computer software instruction, and the computer software instruction may be loaded by a processor to perform the procedure of the method in the embodiments shown in FIG. 5, FIG. 7, FIG. 9A and FIG. 9B, and FIG. 11A and FIG. 11B.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the prior art, or all or some of the technical solutions may be implemented in the form of a software product. The software product is stored in a storage medium and includes several instructions for instructing a computer device (which may be a personal computer, a server, or a network device) to perform all or some of the steps of the methods described in the embodiments of this application. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing embodiments are merely intended for describing the technical solutions of this application, but not for limiting this application.

## Claims

1. A data processing method, **characterized by** comprising:
if obtaining (401) a first data packet and a second data packet of a target call service initiated by a terminal, classifying (402), by a client, the first data packet into a first data packet set and classifying the second data packet into a second data packet set based on a first time segment and a second time segment, wherein a first obtaining moment of the first data packet belongs to the first time segment, a second obtaining moment of the second data packet belongs to the second time segment, the first time segment and the second time segment are different time segments used by the client to obtain the data packets of the target call service, and the first time segment and the second time segment do not intersect;
determining, (403) by the client, a first feature parameter corresponding to the first data packet set and a second feature parameter corresponding to the second data packet set; and
calculating (404), by the client based on a preset audio and/or video quality evaluation algorithm, audio and/or video quality corresponding to the first feature parameter, and audio and/or video quality corresponding to the second feature parameter,
wherein:
when the data packets of the target call service are classified, the client determines whether status information of the terminal in the different time segments changes, and
classifying (402) the data packets is based on whether the status information of the terminal in the different time segments changes,
wherein the status information of the terminal comprises location information of the terminal, and/or a call feature of the data packet.

2. The method according to claim 1, wherein the classifying (402), by a client, the first data packet into a first data packet set and classifying the second data packet into a second data packet set based on a first time segment and a second time segment comprises:
when determining that first status information of the terminal in the first time segment is the same as second status information of the terminal in the second time segment, classifying, by the client, the first data packet into the first data packet set and classifying the second data packet into the second data packet set according to a preset time slice rule.

3. The method according to claim 2, wherein the classifying, by the client, the first data packet into the first data packet set and classifying the second data packet into the second data packet set according to a preset time slice rule comprises:
classifying, by the client, the first data packet into the first data packet set and classifying the second data packet into the second data packet set according to a preset first time slice rule, the first obtaining moment, and the second obtaining moment, wherein an interval between the first obtaining moment and an obtaining moment of at least one data packet in the second data packet set is greater than a preset first duration threshold, an interval between the second obtaining moment and an obtaining moment of at least one data packet in the first data packet set is greater than the first duration threshold, an interval between obtaining moments of any two data packets in the first data packet set is not greater than the first duration threshold, and an interval between obtaining moments of any two data packets in the second data packet set is not greater than the first duration threshold.

4. The method according to claim 2, wherein the classifying, by the client, the first data packet into the first data packet set and classifying the second data packet into the second data packet set according to a preset time slice rule comprises:
if obtaining a third data packet of the target call service, classifying, by the client, the first data packet into the first data packet set and classifying the second data packet into the second data packet set according to a preset second time slice rule, the first obtaining moment, the second obtaining moment, and a third obtaining moment of the third data packet, wherein the third obtaining moment belongs to the first time segment or the second time segment; and
classifying, by the client, the third data packet into the first data packet set or the second data packet set according to the second time slice rule, the first obtaining moment, the second obtaining moment, and the third obtaining moment, wherein the third obtaining moment is earlier than obtaining moments of all data packets of one of the first data packet set and the second data packet set, and is later than obtaining moments of all data packets in the other data packet set, and an interval between the third obtaining moment and an obtaining moment of any data packet in the first data packet set or the second data packet set is not greater than a preset second duration threshold, wherein
the first data packet comprises a first Real-time Transport Protocol, RTP, data packet;
the second data packet comprises a second Real-time Transport Protocol, RTP, data packet; and
the third data packet comprises a first Real-Time Control Protocol, RTCP, data packet.

5. The method according to claim 1, wherein the classifying (402), by a client, the first data packet into a first data packet set and classifying the second data packet into a second data packet set based on a first time segment and a second time segment comprises:
when determining that first status information of the terminal in the first time segment is different from second status information of the terminal in the second time segment, classifying, by the client, the first data packet into the first data packet set and classifying the second data packet into the second data packet set according to a preset status slice rule.

6. The method according to claim 5, wherein the first status information comprises first location information corresponding to the terminal when the client obtains the first data packet;
the second status information comprises second location information corresponding to the terminal when the client obtains the second data packet; and
the classifying, by the client, the first data packet into the first data packet set and classifying the second data packet into the second data packet set according to a preset status slice rule comprises:
classifying, by the client, the first data packet into the first data packet set and classifying the second data packet into the second data packet set according to a preset location slice rule, the first location information, and the second location information, wherein location information corresponding to the terminal when any data packet in the first data packet set is obtained by the client is the first location information, and location information corresponding to the terminal when any data packet in the second data packet set is obtained by the client is the second location information.

7. The method according to claim 6, wherein the first location information comprises a first cell; and the second location information comprises a second cell; or
the first location information comprises a first grid, and the second location information comprises a second grid; or
the first location information comprises a first interface network element through which the first data packet passes; and the second location information comprises a second interface network element through which the second data packet passes, wherein the first interface network element corresponds to the second interface network element.

8. The method according to claim 5, wherein the first status information comprises a first call feature corresponding to the first data packet;
the second status information comprises a second call feature corresponding to the second data packet; and
the classifying, by the client, the first data packet into the first data packet set and classifying the second data packet into the second data packet set according to a preset status slice rule comprises:
classifying, by the client, the first data packet into the first data packet set and classifying the second data packet into the second data packet set according to a preset call feature slice rule, the first call feature, and the second call feature, wherein a call feature corresponding to any data packet in the first data packet set is the first call feature, and a call feature corresponding to any data packet in the second data packet set is the second call feature.

9. The method according to claim 8, wherein the first call feature comprises a first coding/decoding type; and the second call feature comprises a second coding/decoding type; or
the first call feature comprises a first audio code rate, and the second call feature comprises a second audio code rate; or
the first call feature comprises a first video resolution, and the second call feature comprises a second video resolution.

10. A client, comprising:
an obtaining unit (1301), configured to obtain a data packet of a target call service initiated by a terminal;
**characterized by** comprising:
a classification unit (1302), configured to: if the obtaining unit (1301) obtains a first data packet and a second data packet of the target call service, classify the first data packet into a first data packet set and classify the second data packet into a second data packet set based on a first time segment and a second time segment, wherein a first obtaining moment of the first data packet belongs to the first time segment, a second obtaining moment of the second data packet belongs to the second time segment, the first time segment and the second time segment are different time segments used by the obtaining unit (1301) to obtain the data packets of the target call service, and the first time segment and the second time segment do not intersect;
a determining unit (1303), configured to determine a first feature parameter corresponding to the first data packet set and a second feature parameter corresponding to the second data packet set; and
a calculation unit (1304), configured to calculate, based on a preset audio and/or video quality evaluation algorithm, audio and/or video quality corresponding to the first feature parameter, and audio and/or video quality corresponding to the second feature parameter
wherein:
the client further comprises a judging unit (1305) configured to determine whether status information of the terminal in the different time segments changes, and
the classification unit (1302) is further configured to classify the data packets based on whether the status information of the terminal in the different time segments changes,
wherein the status information of the terminal comprises location information of the terminal, and/or a call feature of the data packet.

11. The client according to claim 10, wherein the judging unit (1305) is configured to determine whether first status information of the terminal in the first time segment is the same as second status information of the terminal in the second time segment; and
the classification unit (1302) is specifically configured to: when the judging unit (1305) determines that the first status information is the same as the second status information, classify the first data packet into the first data packet set and classify the second data packet into the second data packet set according to a preset time slice rule.

12. The client according to claim 10, wherein the judging unit (1305) is configured to determine whether first status information of the terminal in the first time segment is the same as second status information of the terminal in the second time segment; and
the classification unit (1302) is specifically configured to: when the judging unit (1305) determines that the first status information is different from the second status information, classify the first data packet into the first data packet set and classify the second data packet into the second data packet set according to a preset status slice rule.

13. The client according to claim 12, wherein the first status information comprises first location information corresponding to the terminal when the obtaining unit (1301) obtains the first data packet; the second status information comprises second location information corresponding to the terminal when the obtaining unit (1301) obtains the second data packet; and the classification unit (1302) is specifically configured to classify the first data packet into the first data packet set and classify the second data packet into the second data packet set according to a preset location slice rule, the first location information, and the second location information, wherein location information corresponding to the terminal when any data packet in the first data packet set is obtained by the client is the first location information, and location information corresponding to the terminal when any data packet in the second data packet set is obtained by the client is the second location information.

14. The client according to claim 13, wherein the first location information comprises a first cell, and the second location information comprises a second cell; or
the first location information comprises a first grid, and the second location information comprises a second grid; or
the first location information comprises a first interface network element through which the first data packet passes, and the second location information comprises a second interface network element through which the second data packet passes, wherein the first interface network element corresponds to the second interface network element.

15. The client according to claim 12, wherein the first status information comprises a first call feature corresponding to the first data packet; the second status information comprises a second call feature corresponding to the second data packet; and the classification unit (1302) is specifically configured to classify the first data packet into the first data packet set and classify the second data packet into the second data packet set according to a preset call feature slice rule, the first call feature, and the second call feature, wherein a call feature corresponding to any data packet in the first data packet set is the first call feature, and a call feature corresponding to any data packet in the second data packet set is the second call feature;
wherein the first call feature comprises a first coding/decoding type, and the second call feature comprises a second coding/decoding type; or
the first call feature comprises a first audio code rate, and the second call feature comprises a second audio code rate; or
the first call feature comprises a first video resolution, and the second call feature comprises a second video resolution.

## Patentansprüche

1. Datenverarbeitungsverfahren, **dadurch gekennzeichnet, dass** es umfasst:
falls ein erstes Datenpaket und ein zweites Datenpaket eines Zielanrufdienstes, der durch ein Endgerät initiiert wird, erhalten wird (401), Einordnen (402), durch einen Client, des ersten Datenpakets in einen ersten Datenpaketsatz und Einordnen des zweiten Datenpakets in einen zweiten Datenpaketsatz basierend auf einem ersten Zeitsegment und einem zweiten Zeitsegment, wobei ein erster Erhaltungszeitpunkt des ersten Datenpakets zu dem ersten Zeitsegment gehört, ein zweiter Erhaltungszeitpunkt des zweiten Datenpakets zu dem zweiten Zeitsegment gehört, das erste Zeitsegment und das zweite Zeitsegment unterschiedliche Zeitsegmente sind, die durch den Client verwendet werden, um die Datenpakete des Zielanrufdienstes zu erhalten, und sich das erste Zeitsegment und das zweite Zeitsegment nicht überschneiden;
Bestimmen (403), durch den Client, eines ersten Merkmalsparameters, der dem ersten Datenpaketsatz entspricht, und eines zweiten Merkmalsparameters, der dem zweiten Datenpaketsatz entspricht; und
Berechnen (404), durch den Client basierend auf einem voreingestellten Algorithmus zum Bewerten einer Audio- und/oder Videoqualität, der Audio- und/oder Videoqualität, die dem ersten Merkmalsparameter entspricht, und der Audio- und/oder Videoqualität, die dem zweiten Merkmalsparameter entspricht,
wobei:
wenn die Datenpakete des Zielanrufdienstes eingeordnet werden, der Client bestimmt, ob sich Statusinformationen des Endgeräts in den unterschiedlichen Zeitsegmenten ändern, und
das Einordnen (402) der Datenpakete darauf basiert, ob sich die Statusinformationen des Endgeräts in den unterschiedlichen Zeitsegmenten ändern,
wobei die Statusinformationen des Endgeräts Standortinformationen des Endgeräts und/oder ein Anrufmerkmal des Datenpakets umfassen.

2. Verfahren nach Anspruch 1, wobei das Einordnen (402), durch einen Client, des ersten Datenpakets in einen ersten Datenpaketsatz und das Einordnen des zweiten Datenpakets in einen zweiten Datenpaketsatz basierend auf einem ersten Zeitsegment und einem zweiten Zeitsegment umfasst:
wenn bestimmt wird, dass erste Statusinformationen des Endgeräts in dem ersten Zeitsegment gleich zweiten Statusinformationen des Endgeräts in dem zweiten Zeitsegment sind, Einordnen, durch den Client, des ersten Datenpakets in den ersten Datenpaketsatz und Einordnen des zweiten Datenpakets in den zweiten Datenpaketsatz gemäß einer voreingestellten Zeit-Slice-Regel.

3. Verfahren nach Anspruch 2, wobei das Einordnen, durch den Client, des ersten Datenpakets in den ersten Datenpaketsatz und das Einordnen des zweiten Datenpakets in den zweiten Datenpaketsatz gemäß einer voreingestellten Zeit-Slice-Regel umfasst:
Einordnen, durch den Client, des ersten Datenpakets in den ersten Datenpaketsatz und Einordnen des zweiten Datenpakets in den zweiten Datenpaketsatz gemäß einer voreingestellten ersten Zeit-Slice-Regel, dem ersten Erhaltungszeitpunkt und dem zweiten Erhaltungszeitpunkt, wobei ein Intervall zwischen dem ersten Erhaltungszeitpunkt und
einem Erhaltungszeitpunkt mindestens eines Datenpakets in dem zweiten Datenpaketsatz größer als ein voreingestellter erster Dauerschwellenwert ist, ein Intervall zwischen dem zweiten Erhaltungszeitpunkt und einem Erhaltungszeitpunkt mindestens eines Datenpakets in dem ersten Datenpaketsatz größer als der erste Dauerschwellenwert ist,
ein Intervall zwischen Erhaltungszeitpunkten von beliebigen zwei Datenpaketen in dem ersten Datenpaketsatz nicht größer als der erste Dauerschwellenwert ist, und ein Intervall zwischen Erhaltungszeitpunkten von beliebigen zwei Datenpaketen in dem zweiten Datenpaketsatz nicht größer als der erste Dauerschwellenwert ist.

4. Verfahren nach Anspruch 2, wobei das Einordnen, durch den Client, des ersten Datenpakets in den ersten Datenpaketsatz und das Einordnen des zweiten Datenpakets in den zweiten Datenpaketsatz gemäß einer voreingestellten Zeit-Slice-Regel umfasst:
falls ein drittes Datenpaket des Zielanrufdienstes erhalten wird, Einordnen, durch den Client, des ersten Datenpakets in den ersten Datenpaketsatz und Einordnen des zweiten Datenpakets in den zweiten Datenpaketsatz gemäß einer voreingestellten zweiten Zeit-Slice-Regel, dem ersten Erhaltungszeitpunkt, dem zweiten Erhaltungszeitpunkt und einem dritten Erhaltungszeitpunkt des dritten Datenpakets, wobei der dritte Erhaltungszeitpunkt zu dem ersten Zeitsegment oder dem zweiten Zeitsegment gehört; und
Einordnen, durch den Client, des dritten Datenpakets in den ersten Datenpaketsatz oder den zweiten Datenpaketsatz gemäß der zweiten Zeit-Slice-Regel, dem ersten Erhaltungszeitpunkt, dem zweiten Erhaltungszeitpunkt und dem dritten Erhaltungszeitpunkt, wobei der dritte Erhaltungszeitpunkt früher als Erhaltungszeitpunkte aller Datenpakete eines des ersten Datenpaketsatzes und des zweiten Datenpaketsatzes ist und später als Erhaltungszeitpunkte aller Datenpakete in dem anderen Datenpaketsatz ist, und ein Intervall zwischen dem dritten Erhaltungszeitpunkt und einem Erhaltungszeitpunkt eines beliebigen Datenpakets in dem ersten Datenpaketsatz oder dem zweiten Datenpaketsatz nicht größer als ein voreingestellter zweiter Dauerschwellenwert ist, wobei
das erste Datenpaket ein erstes Real-Time-Transport-Protocol-Datenpaket, RTP-Datenpaket, umfasst;
das zweite Datenpaket ein zweites Real-Time-Transport-Protocol-Datenpaket, RTP-Datenpaket, umfasst; und das dritte Datenpaket ein erstes Real-Time-Control-Protocol-Datenpaket, RTCP-Datenpaket, umfasst.

5. Verfahren nach Anspruch 1, wobei das Einordnen (402), durch einen Client, des ersten Datenpakets in einen ersten Datenpaketsatz und das Einordnen des zweiten Datenpakets in einen zweiten Datenpaketsatz basierend auf einem ersten Zeitsegment und einem zweiten Zeitsegment umfasst:
wenn bestimmt wird, dass sich erste Statusinformationen des Endgeräts in dem ersten Zeitsegment von zweiten Statusinformationen des Endgeräts in dem zweiten Zeitsegment unterscheiden, Einordnen, durch den Client, des ersten Datenpakets in den ersten Datenpaketsatz und Einordnen des zweiten Datenpakets in den zweiten Datenpaketsatz gemäß einer voreingestellten Status-Slice-Regel.

6. Verfahren nach Anspruch 5, wobei die ersten Statusinformationen erste Standortinformationen umfassen, die dem Endgerät entsprechen, wenn der Client das erste Datenpaket erhält;
die zweiten Statusinformationen zweite Standortinformationen umfassen, die dem Endgerät entsprechen, wenn der Client das zweite Datenpaket erhält; und
das Einordnen, durch den Client, des ersten Datenpakets in den ersten Datenpaketsatz und das Einordnen des zweiten Datenpakets in den zweiten Datenpaketsatz gemäß einer voreingestellten Status-Slice-Regel umfasst:
Einordnen, durch den Client, des ersten Datenpakets in den ersten Datenpaketsatz und Einordnen des zweiten Datenpakets in den zweiten Datenpaketsatz gemäß einer voreingestellten Standort-Slice-Regel, den ersten Standortinformationen und den zweiten Standortinformationen, wobei Standortinformationen, die dem Endgerät entsprechen, wenn ein beliebiges Datenpaket in dem ersten Datenpaketsatz durch den Client erhalten wird, die ersten Standortinformationen sind, und Standortinformationen, die dem Endgerät entsprechen, wenn ein beliebiges Datenpaket in dem zweiten Datenpaketsatz durch den Client erhalten wird, die zweiten Standortinformationen sind.

7. Verfahren nach Anspruch 6, wobei die ersten Standortinformationen eine erste Zelle umfassen; und die zweiten Standortinformationen eine zweite Zelle umfassen; oder
die ersten Standortinformationen ein erstes Gitter umfassen und die zweiten Standortinformationen ein zweites Gitter umfassen; oder
die ersten Standortinformationen ein erstes Schnittstellennetzelement, das das erste Datenpaket durchläuft, umfassen; und die zweiten Standortinformationen ein zweites Schnittstellennetzelement, das das zweite Datenpaket durchläuft, umfassen, wobei das erste Schnittstellennetzelement dem zweiten Schnittstellennetzelement entspricht.

8. Verfahren nach Anspruch 5, wobei die ersten Statusinformationen ein erstes Anrufmerkmal, das dem ersten Datenpaket entspricht, umfassen;
die zweiten Statusinformationen ein zweites Anrufmerkmal, das dem zweiten Datenpaket entspricht, umfassen; und
das Einordnen, durch den Client, des ersten Datenpakets in den ersten Datenpaketsatz und das Einordnen des zweiten Datenpakets in den zweiten Datenpaketsatz gemäß einer voreingestellten Status-Slice-Regel umfasst:
Einordnen, durch den Client, des ersten Datenpakets in den ersten Datenpaketsatz und Einordnen des zweiten Datenpakets in den zweiten Datenpaketsatz gemäß einer voreingestellten Anrufmerkmal-Slice-Regel, dem ersten Anrufmerkmal und dem zweiten Anrufmerkmal, wobei ein Anrufmerkmal, das einem beliebigen Datenpaket in dem ersten Datenpaketsatz entspricht, das erste Anrufmerkmal ist, und ein Anrufmerkmal, das einem beliebigen Datenpaket in dem zweiten Datenpaketsatz entspricht, das zweite Anrufmerkmal ist.

9. Verfahren nach Anspruch 8, wobei das erste Anrufmerkmal eine erste Codier-/Decodierart umfasst; und das zweite Anrufmerkmal eine zweite Codier-/Decodierart umfasst; oder das erste Anrufmerkmal eine erste Audiocoderate umfasst und das zweite Anrufmerkmal eine zweite Audiocoderate umfasst; oder
das erste Anrufmerkmal eine erste Videoauflösung umfasst und das zweite Anrufmerkmal eine zweite Videoauflösung umfasst.

10. Client, der umfasst:
eine Erhaltungseinheit (1301), die konfiguriert ist, um ein Datenpaket eines Zielanrufdienstes, der durch ein Endgerät initiiert wird, zu erhalten;
**gekennzeichnet dadurch, dass** er umfasst:
eine Einordnungseinheit (1302), die konfiguriert ist zum: falls die Erhaltungseinheit (1301) ein erstes Datenpaket und ein zweites Datenpaket des Zielanrufdienstes erhält, Einordnen des ersten Datenpakets in einen ersten Datenpaketsatz und Einordnen des zweiten Datenpakets in einen zweiten Datenpaketsatz basierend auf einem ersten Zeitsegment und einem zweiten Zeitsegment, wobei ein erster Erhaltungszeitpunkt des ersten Datenpakets zu dem ersten Zeitsegment gehört, ein zweiter Erhaltungszeitpunkt des zweiten Datenpakets zu dem zweiten Zeitsegment gehört, das erste Zeitsegment und das zweite Zeitsegment unterschiedliche Zeitsegmente sind, die durch die Erhaltungseinheit (1301) verwendet werden, um die Datenpakete des Zielanrufdienstes zu erhalten, und sich das erste Zeitsegment und das zweite Zeitsegment nicht überschneiden;
eine Bestimmungseinheit (1303), die konfiguriert ist, um einen ersten Merkmalsparameter, der dem ersten Datenpaketsatz entspricht, und einen zweiten Merkmalsparameter, der dem zweiten Datenpaketsatz entspricht, zu bestimmen; und
eine Berechnungseinheit (1304), die konfiguriert ist, um basierend auf einem voreingestellten Algorithmus zum Bewerten der Audio- und/oder Videoqualität, der Audio- und/oder Videoqualität, die dem ersten Merkmalsparameter entspricht, und der Audio- und/oder Videoqualität, die dem zweiten Merkmalsparameter entspricht, zu berechnen,
wobei:
der Client ferner eine Beurteilungseinheit (1305) umfasst, die konfiguriert ist, um zu bestimmen, ob sich Statusinformationen des Endgeräts in den unterschiedlichen Zeitsegmenten ändern, und
die Einordnungseinheit (1302) ferner konfiguriert ist, um die Datenpakete basierend darauf einzuordnen, ob sich die Statusinformationen des Endgeräts in den unterschiedlichen Zeitsegmenten ändern,
wobei die Statusinformationen des Endgeräts Standortinformationen des Endgeräts und/oder ein Anrufmerkmal des Datenpakets umfassen.

11. Client nach Anspruch 10, wobei die Beurteilungseinheit (1305) konfiguriert ist, um zu bestimmen, ob erste Statusinformationen des Endgeräts in dem ersten Zeitsegment gleich zweiten Statusinformationen des Endgeräts in dem zweiten Zeitsegment sind; und die Einordnungseinheit (1302) speziell konfiguriert ist zum: wenn die Beurteilungseinheit (1305) bestimmt, dass die ersten Statusinformationen gleich den zweiten Statusinformationen sind, Einordnen des ersten Datenpakets in den ersten Datenpaketsatz und Einordnen des zweiten Datenpakets in den zweiten Datenpaketsatz gemäß einer voreingestellten Zeit-Slice-Regel.

12. Client nach Anspruch 10, wobei die Beurteilungseinheit (1305) konfiguriert ist, um zu bestimmen, ob erste Statusinformationen des Endgeräts in dem ersten Zeitsegment gleich zweiten Statusinformationen des Endgeräts in dem zweiten Zeitsegment sind; und die Einordnungseinheit (1302) speziell konfiguriert ist zum: wenn die Beurteilungseinheit (1305) bestimmt, dass sich die ersten Statusinformationen von den zweiten Statusinformationen unterscheiden, Einordnen des ersten Datenpakets in den ersten Datenpaketsatz und Einordnen des zweiten Datenpakets in den zweiten Datenpaketsatz gemäß einer voreingestellten Status-Slice-Regel.

13. Client nach Anspruch 12, wobei die ersten Statusinformationen erste Standortinformationen umfassen, die dem Endgerät entsprechen, wenn die Erhaltungseinheit (1301) das erste Datenpaket erhält; die zweiten Statusinformationen zweite Standortinformationen umfassen, die dem Endgerät entsprechen, wenn die Erhaltungseinheit (1301) das zweite Datenpaket erhält; und die Einordnungseinheit (1302) speziell konfiguriert ist, um das erste Datenpaket in den ersten Datenpaketsatz einzuordnen und das zweite Datenpaket in den zweiten Datenpaketsatz einzuordnen, gemäß einer voreingestellten Standort-Slice-Regel, den ersten Standortinformationen und den zweiten Standortinformationen, wobei Standortinformationen, die dem Endgerät entsprechen, wenn ein beliebiges Datenpaket in dem ersten Datenpaketsatz durch den Client erhalten wird, die ersten Standortinformationen sind, und Standortinformationen, die dem Endgerät entsprechen, wenn ein beliebiges Datenpaket in dem zweiten Datenpaketsatz durch den Client erhalten wird, die zweiten Standortinformationen sind.

14. Client nach Anspruch 13, wobei die ersten Standortinformationen eine erste Zelle umfassen und die zweiten Standortinformationen eine zweite Zelle umfassen; oder die ersten Standortinformationen ein erstes Gitter umfassen und die zweiten Standortinformationen ein zweites Gitter umfassen; oder
die ersten Standortinformationen ein erstes Schnittstellennetzelement, das das erste Datenpaket durchläuft, umfassen und die zweiten Standortinformationen ein zweites Schnittstellennetzelement, das das zweite Datenpaket durchläuft, umfassen, wobei das erste Schnittstellennetzelement dem zweiten Schnittstellennetzelement entspricht.

15. Client nach Anspruch 12, wobei die ersten Statusinformationen ein erstes Anrufmerkmal, das dem ersten Datenpaket entspricht, umfassen; die zweiten Statusinformationen ein zweites Anrufmerkmal, das dem zweiten Datenpaket entspricht, umfassen; und die Einordnungseinheit (1302) speziell konfiguriert ist, um das erste Datenpaket in den ersten Datenpaketsatz einzuordnen und das zweite Datenpaket in den zweiten Datenpaketsatz einzuordnen, gemäß einer voreingestellten Anrufmerkmal-Slice-Regel, dem ersten Anrufmerkmal und dem zweiten Anrufmerkmal, wobei ein Anrufmerkmal, das einem beliebigen Datenpaket in dem ersten Datenpaketsatz entspricht, das erste Anrufmerkmal ist, und ein Anrufmerkmal, das einem beliebigen Datenpaket in dem zweiten Datenpaketsatz entspricht, das zweite Anrufmerkmal ist;
wobei das erste Anrufmerkmal eine erste Codier-/Decodierart umfasst und das zweite Anrufmerkmal eine zweite Codier-/Decodierart umfasst; oder
das erste Anrufmerkmal eine erste Audiocoderate umfasst und das zweite Anrufmerkmal eine zweite Audiocoderate umfasst; oder
das erste Anrufmerkmal eine erste Videoauflösung umfasst und das zweite Anrufmerkmal eine zweite Videoauflösung umfasst.

## Revendications

1. Procédé de traitement de données, **caractérisé en ce qu'**il comprend :
en cas d'obtention (401) d'un premier paquet de données et d'un deuxième paquet de données d'un service d'appel cible initié par un terminal, la classification (402), par un client, du premier paquet de données dans un premier ensemble de paquets de données et la classification du deuxième paquet de données dans un second ensemble de paquets de données sur la base d'un premier segment temporel et d'un second segment temporel, dans lequel un premier moment d'obtention du premier paquet de données appartient au premier segment temporel, un deuxième moment d'obtention du deuxième paquet de données appartient au second segment temporel, le premier segment temporel et le second segment temporel sont des segments temporels différents utilisés par le client pour obtenir les paquets de données du service d'appel cible, et le premier segment temporel et le second segment temporel ne se croisent pas ;
la détermination (403), par le client, d'un premier paramètre de caractéristique correspondant au premier ensemble de paquets de données et d'un second paramètre de caractéristique correspondant au second ensemble de paquets de données ; et
le calcul (404), par le client, sur la base d'un algorithme d'évaluation de qualité audio et/ou vidéo prédéfini, d'une qualité audio et/ou vidéo correspondant au premier paramètre de caractéristique, et d'une qualité audio et/ou vidéo correspondant au second paramètre de caractéristique,
dans lequel :
lorsque les paquets de données du service d'appel cible sont classés, le client détermine si des informations d'état du terminal dans les différents segments temporels changent, et la classification (402) des paquets de données est basée sur le fait que les informations d'état du terminal dans les différents segments temporels changent ou non,
dans lequel les informations d'état du terminal comprennent des informations d'emplacement du terminal, et/ou une caractéristique d'appel du paquet de données.

2. Procédé selon la revendication 1, dans lequel la classification (402), par un client, du premier paquet de données dans un premier ensemble de paquets de données et la classification du deuxième paquet de données dans un second ensemble de paquets de données sur la base d'un premier segment temporel et d'un second segment temporel comprend :
lorsqu'il est déterminé que des premières informations d'état du terminal dans le premier segment temporel sont les mêmes que des secondes informations d'état du terminal dans le second segment temporel, la classification, par le client, du premier paquet de données dans le premier ensemble de paquets de données et la classification du deuxième paquet de données dans le second ensemble de paquets de données selon une règle de tranche temporelle prédéfinie.

3. Procédé selon la revendication 2, dans lequel la classification, par le client, du premier paquet de données dans le premier ensemble de paquets de données et la classification du deuxième paquet de données dans le second ensemble de paquets de données selon une règle de tranche temporelle prédéfinie comprend :
la classification, par le client, du premier paquet de données dans le premier ensemble de paquets de données et la classification du deuxième paquet de données dans le second ensemble de paquets de données selon une première règle de tranche temporelle prédéfinie, le premier moment d'obtention, et le deuxième moment d'obtention, dans lequel un intervalle entre le premier moment d'obtention et un moment d'obtention d'au moins un paquet de données dans le second ensemble de paquets de données est supérieur à un premier seuil de durée prédéfini, un intervalle entre le deuxième moment d'obtention et un moment d'obtention d'au moins un paquet de données dans le premier ensemble de paquets de données est supérieur au premier seuil de durée, un intervalle entre les moments d'obtention de deux paquets de données quelconques dans le premier ensemble de paquets de données n'est pas supérieur au premier seuil de durée, et un intervalle entre les moments d'obtention de deux paquets de données quelconques dans le second ensemble de paquets de données n'est pas supérieur au premier seuil de durée.

4. Procédé selon la revendication 2, dans lequel la classification, par le client, du premier paquet de données dans le premier ensemble de paquets de données et la classification du deuxième paquet de données dans le second ensemble de paquets de données selon une règle de tranche temporelle prédéfinie comprend :
en cas d'obtention d'un troisième paquet de données du service d'appel cible, la classification, par le client, du premier paquet de données dans le premier ensemble de paquets de données et la classification du deuxième paquet de données dans le second ensemble de paquets de données selon une seconde règle de tranche temporelle prédéfinie, le premier moment d'obtention, le deuxième moment d'obtention, et un troisième moment d'obtention du troisième paquet de données, dans lequel le troisième moment d'obtention appartient au premier segment temporel ou au second segment temporel ; et
la classification, par le client, du troisième paquet de données dans le premier ensemble de paquets de données ou le second ensemble de paquets de données selon la seconde règle de tranche temporelle, le premier moment d'obtention, le deuxième moment d'obtention, et le troisième moment d'obtention, dans lequel le troisième moment d'obtention est antérieur aux moments d'obtention de tous les paquets de données de l'un du premier ensemble de paquets de données et du second ensemble de paquets de données, et est ultérieur aux moments d'obtention de tous les paquets de données dans l'autre ensemble de paquets de données, et un intervalle entre le troisième moment d'obtention et un moment d'obtention d'un paquet de données quelconque dans le premier ensemble de paquets de données ou le second ensemble de paquets de données n'est pas supérieur à un second seuil de durée prédéfini, dans lequel le premier paquet de données comprend un premier paquet de données de protocole de transport en temps réel, RTP ;
le deuxième paquet de données comprend un second paquet de données de protocole de transport en temps réel, RTP ; et
le troisième paquet de données comprend un premier paquet de données de protocole de contrôle en temps réel, RTCP.

5. Procédé selon la revendication 1, dans lequel la classification (402), par un client, du premier paquet de données dans un premier ensemble de paquets de données et la classification du deuxième paquet de données dans un second ensemble de paquets de données sur la base d'un premier segment temporel et d'un second segment temporel comprend :
lorsqu'il est déterminé que des premières informations d'état du terminal dans le premier segment temporel sont différentes de secondes informations d'état du terminal dans le second segment temporel, la classification, par le client, du premier paquet de données dans le premier ensemble de paquets de données et la classification du deuxième paquet de données dans le second ensemble de paquets de données selon une règle de tranche d'état prédéfinie.

6. Procédé selon la revendication 5, dans lequel les premières informations d'état comprennent des premières informations d'emplacement correspondant au terminal lorsque le client obtient le premier paquet de données ;
les secondes informations d'état comprennent des secondes informations d'emplacement correspondant au terminal lorsque le client obtient le deuxième paquet de données ; et la classification, par le client, du premier paquet de données dans le premier ensemble de paquets de données et la classification du deuxième paquet de données dans le second ensemble de paquets de données selon une règle de tranche d'état prédéfinie comprend : la classification, par le client, du premier paquet de données dans le premier ensemble de paquets de données et la classification du deuxième paquet de données dans le second ensemble de paquets de données selon une règle de tranche d'emplacement prédéfinie, les premières informations d'emplacement, et les secondes informations d'emplacement, dans lequel les informations d'emplacement correspondant au terminal lorsqu'un paquet de données quelconque dans le premier ensemble de paquets de données est obtenu par le client sont les premières informations d'emplacement, et les informations d'emplacement correspondant au terminal lorsqu'un paquet de données quelconque dans le second ensemble de paquets de données est obtenu par le client sont les secondes informations d'emplacement.

7. Procédé selon la revendication 6, dans lequel les premières informations d'emplacement comprennent une première cellule ; et les secondes informations d'emplacement comprennent une seconde cellule ; ou
les premières informations d'emplacement comprennent une première grille, et les secondes informations d'emplacement comprennent une seconde grille ; ou
les premières informations d'emplacement comprennent un premier élément de réseau d'interface par l'intermédiaire duquel passe le premier paquet de données ; et les secondes informations d'emplacement comprennent un second élément de réseau d'interface par l'intermédiaire duquel le deuxième paquet de données passe, dans lequel le premier élément de réseau d'interface correspond au second élément de réseau d'interface.

8. Procédé selon la revendication 5, dans lequel les premières informations d'état comprennent une première caractéristique d'appel correspondant au premier paquet de données ;
les secondes informations d'état comprennent une seconde caractéristique d'appel correspondant au deuxième paquet de données ; et
la classification, par le client, du premier paquet de données dans le premier ensemble de paquets de données et la classification du deuxième paquet de données dans le second ensemble de paquets de données selon une règle de tranche d'état prédéfinie comprend : la classification, par le client, du premier paquet de données dans le premier ensemble de paquets de données et la classification du deuxième paquet de données dans le second ensemble de paquets de données selon une règle de tranche de caractéristique d'appel prédéfinie, la première caractéristique d'appel, et la seconde caractéristique d'appel, dans lequel une caractéristique d'appel correspondant à un paquet de données quelconque dans le premier ensemble de paquets de données est la première caractéristique d'appel, et une caractéristique d'appel correspondant à un paquet de données quelconque dans le second ensemble de paquets de données est la seconde caractéristique d'appel.

9. Procédé selon la revendication 8, dans lequel la première caractéristique d'appel comprend un premier type de codage/décodage ; et la seconde caractéristique d'appel comprend un second type de codage/décodage ; ou
la première caractéristique d'appel comprend un premier débit de code audio, et la seconde caractéristique d'appel comprend un second débit de code audio ; ou
la première caractéristique d'appel comprend une première résolution vidéo, et la seconde caractéristique d'appel comprend une seconde résolution vidéo.

10. Client, comprenant :
une unité d'obtention (1301), configurée pour obtenir un paquet de données d'un service d'appel cible initié par un terminal ;
**caractérisé en ce qu'**il comprend :
une unité de classification (1302), configurée pour : si l'unité d'obtention (1301) obtient un premier paquet de données et un deuxième paquet de données du service d'appel cible, classer le premier paquet de données dans un premier ensemble de paquets de données et classer le deuxième paquet de données dans un second ensemble de paquets de données sur la base d'un premier segment temporel et d'un second segment temporel, dans lequel un premier moment d'obtention du premier paquet de données appartient au premier segment temporel, un deuxième moment d'obtention du deuxième paquet de données appartient au second segment temporel, le premier segment temporel et le second segment temporel sont des segments temporels différents utilisés par l'unité d'obtention (1301) pour obtenir les paquets de données du service d'appel cible, et le premier segment temporel et le second segment temporel ne se croisent pas ;
une unité de détermination (1303), configurée pour déterminer un premier paramètre de caractéristique correspondant au premier ensemble de paquets de données et un second paramètre de caractéristique correspondant au second ensemble de paquets de données ; et
une unité de calcul (1304), configurée pour calculer, sur la base d'un algorithme d'évaluation de qualité audio et/ou vidéo prédéfini, une qualité audio et/ou vidéo correspondant au premier paramètre de caractéristique, et une qualité audio et/ou vidéo correspondant au second paramètre de caractéristique
dans lequel :
le client comprend en outre une unité de jugement (1305) configurée pour déterminer si des informations d'état du terminal dans les différents segments temporels changent, et
l'unité de classification (1302) est en outre configurée pour classer les paquets de données sur la base du fait que les informations d'état du terminal dans les différents segments temporels changent ou non,
dans lequel les informations d'état du terminal comprennent des informations d'emplacement du terminal, et/ou une caractéristique d'appel du paquet de données.

11. Client selon la revendication 10, dans lequel l'unité de jugement (1305) est configurée pour déterminer si des premières informations d'état du terminal dans le premier segment temporel sont les mêmes que des secondes informations d'état du terminal dans le second segment temporel ; et
l'unité de classification (1302) est spécifiquement configurée pour : lorsque l'unité de jugement (1305) détermine que les premières informations d'état sont les mêmes que les secondes informations d'état, classer le premier paquet de données dans le premier ensemble de paquets de données et classer le deuxième paquet de données dans le second ensemble de paquets de données selon une règle de tranche temporelle prédéfinie.

12. Client selon la revendication 10, dans lequel l'unité de jugement (1305) est configurée pour déterminer si des premières informations d'état du terminal dans le premier segment temporel sont les mêmes que des secondes informations d'état du terminal dans le second segment temporel ; et
l'unité de classification (1302) est spécifiquement configurée pour : lorsque l'unité de jugement (1305) détermine que les premières informations d'état sont différentes des secondes informations d'état, classer le premier paquet de données dans le premier ensemble de paquets de données et classer le deuxième paquet de données dans le second ensemble de paquets de données selon une règle de tranche d'état prédéfinie.

13. Client selon la revendication 12, dans lequel les premières informations d'état comprennent des premières informations d'emplacement correspondant au terminal lorsque l'unité d'obtention (1301) obtient le premier paquet de données ; les secondes informations d'état comprennent des secondes informations d'emplacement correspondant au terminal lorsque l'unité d'obtention (1301) obtient le deuxième paquet de données ; et l'unité de classification (1302) est spécifiquement configurée pour classer le premier paquet de données dans le premier ensemble de paquets de données et classer le deuxième paquet de données dans le second ensemble de paquets de données selon une règle de tranche d'emplacement prédéfinie, les premières informations d'emplacement, et les secondes informations d'emplacement, dans lequel les informations d'emplacement correspondant au terminal lorsqu'un paquet de données quelconque dans le premier ensemble de paquets de données est obtenu par le client sont les premières informations d'emplacement, et les informations d'emplacement correspondant au terminal lorsqu'un paquet de données quelconque dans le second ensemble de paquets de données est obtenu par le client sont les secondes informations d'emplacement.

14. Client selon la revendication 13, dans lequel les premières informations d'emplacement comprennent une première cellule, et les secondes informations d'emplacement comprennent une seconde cellule ; ou
les premières informations d'emplacement comprennent une première grille, et les secondes informations d'emplacement comprennent une seconde grille ; ou
les premières informations d'emplacement comprennent un premier élément de réseau d'interface par l'intermédiaire duquel passe le premier paquet de données, et les secondes informations d'emplacement comprennent un second élément de réseau d'interface par l'intermédiaire duquel passe le deuxième paquet de données, dans lequel le premier élément de réseau d'interface correspond au second élément de réseau d'interface.

15. Client selon la revendication 12, dans lequel les premières informations d'état comprennent une première caractéristique d'appel correspondant au premier paquet de données ; les secondes informations d'état comprennent une seconde caractéristique d'appel correspondant au deuxième paquet de données ; et l'unité de classification (1302) est spécifiquement configurée pour classer le premier paquet de données dans le premier ensemble de paquets de données et classer le deuxième paquet de données dans le second ensemble de paquets de données selon une règle de tranche de caractéristique d'appel prédéfinie, la première caractéristique d'appel, et la seconde caractéristique d'appel, dans lequel une caractéristique d'appel correspondant à un paquet de données quelconque dans le premier ensemble de paquets de données est la première caractéristique d'appel, et une caractéristique d'appel correspondant à un paquet de données quelconque dans le second ensemble de paquets de données est la seconde caractéristique d'appel ; dans lequel la première caractéristique d'appel comprend un premier type de codage/décodage, et la seconde caractéristique d'appel comprend un second type de codage/décodage ; ou
la première caractéristique d'appel comprend un premier débit de code audio, et la seconde caractéristique d'appel comprend un second débit de code audio ; ou
la première caractéristique d'appel comprend une première résolution vidéo, et la seconde caractéristique d'appel comprend une seconde résolution vidéo.
